# EUROPÄISCHE PATENTSCHRIFT

(11) **EP 0 574 792 B1**
(45) Veröffentlichungstag und Bekanntmachung des Hinweises auf die Patenterteilung: **27.05.1998**
(21) Anmeldenummer: 93109141.7
(22) Anmeldetag: 07.06.1993
(51) Int. Cl.: C09B 67/50, C09B 67/22, C09B 67/12, C09B 67/04, C08K 5/34, C09D 7/12, C09D 11/02

(54) **Verfahren zur Herstellung von Kupferphthalocyaninpigmentzubereitungen der alpha-Phase**
Process for the manufacture of copper phthalocyanine compositions in alpha form
Procédé de préparation de compositions de phtalocyanines de cuivre de la forme alpha

(30) Priorität: 18.06.1992 DE 4219950
(43) Veröffentlichungstag der Anmeldung: 22.12.1993
(73) Patentinhaber: Clariant GmbH, 65929 Frankfurt am Main (DE)
(72) Erfinder: Dietz, Erwin, Dr., D-6233 Kelkheim/Ts. (DE); Urban, Manfred, D-6200 Wiesbaden (DE)

(56) Entgegenhaltungen:
- EP-A- 0 020 306
- EP-A- 0 221 466
- FR-A- 1 434 259
- FR-A- 2 270 305
- FR-A- 2 333 836
- FR-A- 2 349 627
- GB-A- 2 211 509
- US-A- 2 999 862
- US-A- 3 758 321

## Beschreibung

Die vorliegende Erfindung liegt auf dem technischen Gebiet der Phthalocyaninpigmente und betrifft ein umweltfreundliches und wirtschaftliches Verfahren zur Herstellung von Pigmentzubereitungen, die Kupferphthalocyaninpigmente der α-Phase enthalten, sowie deren Verwendung.

Es ist bekannt, Kupferphthalocyaninpigmente der α-Phase durch Lösen von Kupferphthalocyaninrohpigmenten in konzentrierter Schwefelsäure und anschließendes Fällen dieser Lösung in überschüssigem Wasser oder durch Trockenmahlung mit oder ohne Salz- oder Lösemittelzusatz oder durch wäßrige Perlmahlung herzustellen. In einigen Fällen, besonders bei Verwendung von Kupferphthalocyaninrohpigmenten der β-Phase als Ausgangsprodukt, erfolgt dabei eine Phasenumwandlung in die α-Phase.

Die DE-A1-2 421 804 (US-PS 4 056 534) beschreibt die Herstellung von Kupferphthalocyaninpigmenten der α-Phase, wobei man durch Schwefelsäurebehandlung ein grobkristallines Kupferphthalocyaninrohpigment der α-Phase herstellt, dieses in Wasser vermahlt und anschließend eine Nachbehandlung im wäßrig/organischen Medium bei erhöhter Temperatur durchführt. Bei diesem Verfahren müssen die bei der Reinigung des Rohkupferphthalocyanins anfallenden großen Mengen an Schwefelsäure wieder regeneriert werden. Die erhaltenen Pigmente sind nicht geeignet für den Einsatz in aromatenhaltigen Lacken, so daß ihr Einsatzgebiet wesentlich eingeschränkt ist.

Die GB-A1-2 211 509 beschreibt ein Verfahren zur Herstellung von Kupferphthalocyaninpigmenten der α-Phase durch Trockenmahlung von Kupferphthalocyaninrohpigmenten der β-Phase und gleichzeitige Überführung in die α-Phase sowie eine anschließende wäßrige Mahlung des erhaltenen Präpigments in Gegenwart von 25% oberflächenaktiven Substanzen, bezogen auf das Pigment. Die oberflächenaktiven Substanzen gelangen bei der Aufarbeitung ins Abwasser, das durch aufwendige Aufarbeitung gereinigt werden muß. Außerdem ist das Verfahren teuer, da eine Trockenmahlung und eine Naßmahlung angewendet werden müssen.

Die GB-A1-1 096 192 beschreibt ein wäßriges Perlmahlverfahren zur Überführung von Kupferphthalocyaninrohpigmenten der β-Phase in Gegenwart von geringen Mengen oberflächenaktiven Mitteln in Kupferphthalocyaninpigmente, die weitgehend in der α-Phase vorliegen. Die erhaltenen Pigmente genügen jedoch nicht mehr den Anforderungen, die an hochwertige Pigmente gestellt werden. Die beschriebenen Kupferphthalocyaninpigmente der α-Phase sind in aromatenhaltigen Lacken nicht stabil, weshalb ihr Einsatz stark eingeschränkt ist.

Die nach diesen bekannten Naßmahlverfahren hergestellten Pigmente erfüllen nicht mehr die heutigen Qualitätsanforderungen.

Der vorliegenden Erfindung lag daher die Aufgabe zugrunde, ein Verfahren zur Herstellung einer Zubereitung von Kupferphthalocyaninpigmenten der α-Phase zur Verfügung zu stellen, das die vorstehend genannten Nachteile vermeidet und die genannten Pigmente in der α-Phase und in einer solchen Form liefert, daß daraus Pigmentzubereitungen mit hervorragenden rheologischen und coloristischen Eigenschaften hergestellt werden können.

Diese Aufgabe wurde dadurch gelöst, daß man die bei der Synthese anfallenden oder die nach der Synthese mit Schwefelsäure gereinigten grobkristallinen Phthalocyaninrohpigmente, die überwiegend in der β-Phase vorliegen, in einem wäßrigen, vorzugsweise neutralen bis alkalischen Medium auf einer Rührwerkskugelmühle mit hoher Energiedichte und kleinen Mahlkörpern bis zum Erreichen eines bestimmten minimalen Feinverteilungsgrades der resultierenden Pigmentteilchen naßvermahlt und die erhaltenen Mahlgutsuspensionen dann direkt, oder im Falle der Zwischenisolierung nach deren Wiederaufnahme in einer inerten Flüssigkeit, vorzugsweise in Gegenwart von organischen Lösemitteln, einer üblichen Finishbehandlung bei erhöhter Temperatur aussetzt, wobei in einer bevorzugten Ausführungsform Pigmentdispergatoren der nachstehend definierten Formel (I) vor oder während der Naßvermahlung, während oder nach der Finishbehandlung oder in beiden genannten Behandlungsschritten zugegeben werden.

Gegenstand der vorliegenden Erfindung ist ein Verfahren zur Herstellung eines Kupferphthalocyaninpigmentes der α-Phase oder einer Pigmentzubereitung auf Basis eines Kupferphthalocyaninpigments der α-Phase, dadurch gekennzeichnet, daß man ein Kupferphthalocyaninpigment, das überwiegend in der β-Phase vorliegt,
a) zunächst in einem wäßrigen, vorzugsweise neutralen bis alkalischen, Medium, das geringe Mengen von <5 Gew.-% eines organischen Lösemittels enthalten darf, in einer Rührwerkskugelmühle, die mit einer Leistungsdichte von mehr als 2,5 kW pro Liter Mahlraum und einer Rührwerksumfangsgeschwindigkeit von mehr als 12 m/s betrieben wird, unter der Einwirkung von Mahlkörpern mit einem Durchmesser kleiner als 1 mm naßvermahlt, anschließend
b) die nach a) erhaltene Präpigmentzusammensetzung
   b1) entweder in Form der so erhaltenen Mahlgutsuspension; oder
   b2) nach Zusatz eines organischen Lösemittels zu der nach a) erhaltenen Mahlgutsuspension; oder
   b3) im Falle einer Zwischenisolierung des Präpigments oder der Präpigmentzusammensetzung, nach vorheriger Wiederaufnahme in einem inerten organischen Lösemittel
   einer Finishbehandlung bei erhöhter Temperatur unterwirft, und
c) anschließend das resultierende Pigment oder die Pigmentzubereitung isoliert.

Unter Isolieren wird das Abdestillieren des Lösemittels, Filtrieren und Waschen des Preßkuchens sowie anschließendes Trocknen und Mahlen des Pigments oder der Pigmentzubereitung verstanden.

In einer bevorzugten Ausführungsform des erfindungsgemäßen Verfahrens wird der Pigmentsuspension vor, während oder nach einem oder mehreren der Teilschritte a), b) und c) einmal oder mehrmals mindestens ein Pigmentdispergator der Formel (I) zugegeben

P―Xₘ (I),

in welcher
P für einen m-wertigen Rest auf Basis der Formel (II) 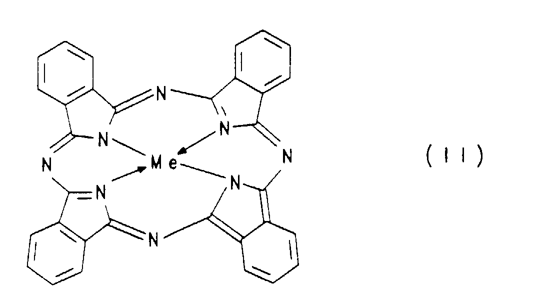 steht, worin
   m eine Zahl von 1 bis 6 ist,
   Me zwei Wasserstoffatome oder ein zweiwertiges Metallatom, vorzugsweise ein Kupfer-, Eisen-, Zink-, Nickel-, Kobalt- oder Zinnatom, insbesondere ein Kupferatom, bedeutet und
   X eine Gruppe der Formel (IIIa)

      -COOM (IIIa)

      oder eine Gruppe der Formel (IIIb)

      -SO₃M (IIIb)

      darstellt, worin M ein Wasserstoffatom oder ein Äquivalent eines Alkali-, Erdalkali- oder Ammoniumions bedeutet oder worin
X eine Gruppe der Formel (IIIc) 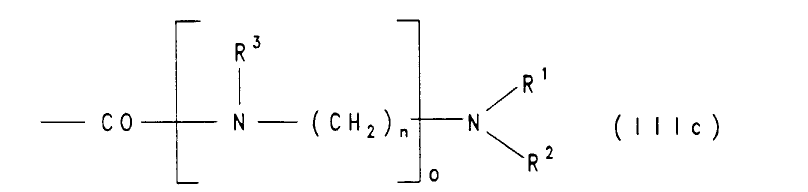 oder eine Gruppe der Formel (IIId) 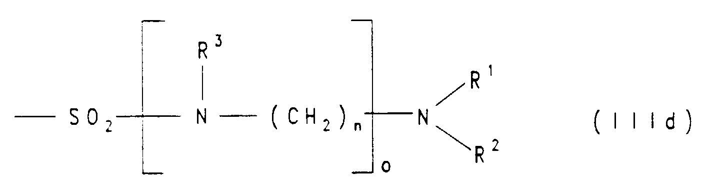 darstellt, worin R¹ und R² gleich oder verschieden sind und ein Wasserstoffatom, eine C₁-C₂₀-Alkyl-, C₂-C₂₀-Alkenylgruppe oder eine C₅-C₇-Cycloalkylgruppe, vorzugsweise ein Wasserstoffatom, eine Methyl- oder Ethylgruppe, bedeuten, oder worin R¹ und R² gemeinsam mit dem angrenzenden Stickstoffatom ein aliphatisches oder aromatisches, fünf- bis siebengliedriges heterocyclisches System mit jeweils 1 bis 3 ringangehörigen, gleichen oder unterschiedlichen Heteroatomen aus der Reihe Stickstoff, Sauerstoff oder Schwefel bilden, vorzugsweise Imidazol, Piperidin, Piperazin, Pyrrolidin, Morpholin, Imidazolin und Hexamethylenimin,
   R³ ein Wasserstoffatom oder eine C₁-C₄-Alkylgruppe, vorzugsweise ein Wasserstoffatom oder eine Methylgruppe, ist,
   n eine Zahl von 1 bis 6, vorzugsweise 2 oder 3,
   o die Zahl 0 oder 1, vorzugsweise 1, und
   m eine Zahl von 1 bis 4 sind, oder worin
X eine Aminomethylengruppe der Formel (IIIe) 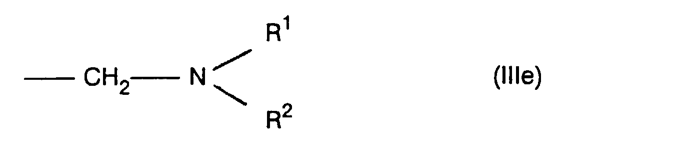 darstellt, worin R¹ und R² die vorstehend angegebene Bedeutung haben und m eine Zahl von 1 bis 6 ist, oder worin
X eine Gruppe der Formel (IIIf) 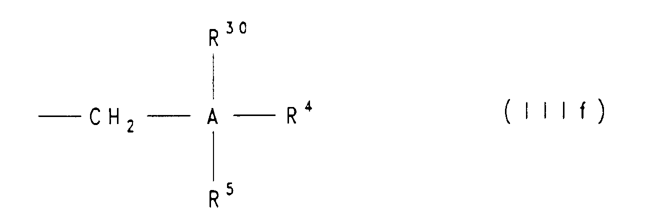 darstellt, worin A einen fünf- oder sechsgliedrigen aromatischen Ring oder einen kondensierten aromatischen Heterocyclus darstellt, welcher 1 bis 3 gleiche oder unterschiedliche Heteroatome aus der Reihe Stickstoff, Sauerstoff oder Schwefel enthält, vorzugsweise Imidazol, Triazol oder Pyrazol darstellt, und der Heterocyclus über ein Kohlenstoffatom an die Methylengruppe gebunden ist,
   R³⁰ und R⁴ ein Wasserstoffatom, eine C₁-C₄-Alkyl-, C₁-C₄-Hydroxyalkyl- oder eine C₂-C₄-Alkenylgruppe, vorzugsweise ein Wasserstoffatom, Methyl, Ethyl oder C₂H₄OH, oder eine Arylgruppe bedeuten, wobei Aryl für unsubstituiertes oder für mit 1 bis 4 Resten aus der Gruppe C₁-C₆-Alkyl, Halogen, vorzugsweise F, Cl oder Br, C₁-C₆-Alkoxy, Cyan, CONH₂ und COOR¹², wobei R¹² Wasserstoff oder C₁-C₆-Alkyl bedeutet, substituiertes Phenyl steht,
   R³⁰ und R⁴ gemeinsam auch einen aliphatischen oder aromatischen Ring, vorzugsweise einen Phenylring, bilden können,
   R⁵ ein Wasserstoffatom, eine C₁-C₄-Alkyl-, eine C₁-C₃-Hydroxyalkyl- oder eine C₂-C₄-Alkenylgruppe bedeutet und
   m eine Zahl von 1 bis 4 ist, oder worin
X eine Gruppe der Formel (IIIg) 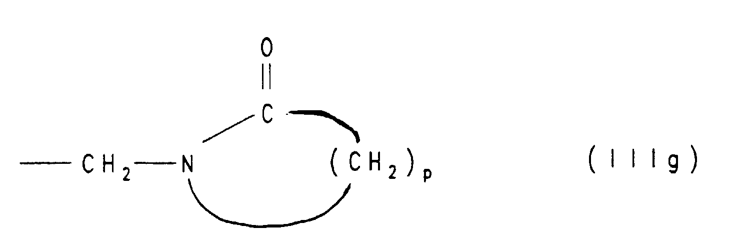 darstellt, wobei p eine Zahl von 3 bis 6, vorzugsweise 3 bis 5, und m eine Zahl von 1 bis 4 ist, oder worin
X eine Phthalimidomethylengruppe der Formel (IIIh) 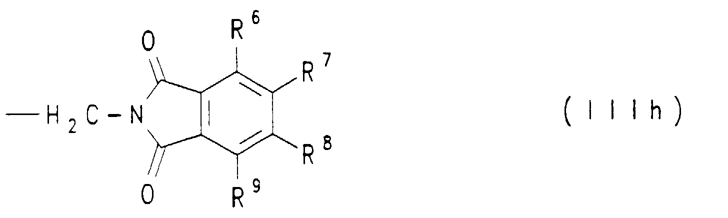 darstellt, wobei R⁶, R⁸ und R⁹ gleich oder verschieden sind und ein Wasserstoff-, Fluor-, Chlor- oder Bromatom, vorzugsweise ein Wasserstoffatom, bedeuten, R⁷ ein Wasserstoff-, Fluor, Chlor- oder Bromatom ist oder eine Nitro-, C₁-C₆-Alkyl-, C₁-C₆-Alkoxy- oder Benzoylaminogruppe, vorzugsweise ein Wasserstoffatom, bedeutet, und
   m eine Zahl von 1 bis 4 ist, oder worin
X eine o-Sulfobenzoesäureimidomethylengruppe der Formel (IIIi) 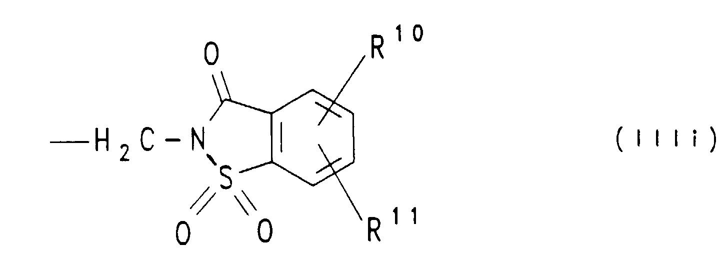 darstellt, wobei R¹⁰ und R¹¹ gleich oder verschieden sind und ein Wasserstoff-, Chlor- oder Bromatom oder eine C₁-C₄-Alkyl-, C₁-C₄-Alkoxy- oder eine Nitrogruppe, vorzugsweise im Wasserstoffatom, bedeuten und
   m eine Zahl von 1 bis 4 ist, oder worin
X eine Gruppe der Formel (IIIk) 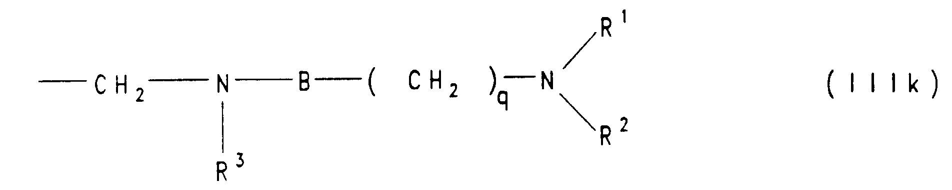 darstellt, in der B eine Carbonyl- oder Sulfonylgruppe, vorzugsweise eine Carbonylgruppe, ist und R¹, R² und R³ die vorstehend angegebene Bedeutung besitzen,
   q die Zahl 1 oder 2, vorzugsweise 1, und
   m eine Zahl von 1 bis 4 ist, oder es wird mindestens ein Pigmentdispergator der Formel (I) zugegeben, der in einem Molekül verschiedene der vorstehend angegebenen Reste X enthält.

Für das erfindungsgemäße Verfahren zur Herstellung dieser Pigmente oder Pigmentzubereitungen ist eine hohe Mahlwirkung erforderlich, die durch den Einsatz einer speziellen Ausführungsform der Rührwerkskugelmühle in Verbindung mit der Einhaltung spezifizierter Mahl- und Finishbedingungen erreicht wird. Für eine Mahlung der gesuchten Effizienz sind Rührwerkskugelmühlen geeignet, die zum diskontinuierlichen und kontinuierlichen Arbeitsablauf ausgelegt sind, einen zylinderförmigen oder hohlzylinderförmigen Mahlraum in horizontaler oder vertikaler Bauweise enthalten und mit einer spezifischen Leistungsdichte von über 2,5 kW pro Liter Mahlraum betrieben werden können und deren Rührwerksumfangsgeschwindigkeit über 12 m/s beträgt. Dafür geeignete Mühlen sind z.B. in der DE-A1-37 16 587 (US-PS 5 062 577) beschrieben. Die pro Zeiteinheit vom Rührwerk abgegebene Energie wird als Zerkleinerungsarbeit und als Reibungsenergie in Form von Wärme an das Mahlgut übertragen. Zur problemlosen Abführung dieser großen Wärmemenge muß durch konstruktive Vorkehrungen das Verhältnis von Mahlraum zu Mahlraumoberfläche (Kühlfläche) möglichst klein gehalten werden. Dieses Verhältnis sollte kleiner als 0,15:1 (dm³:dm²) sein.

Als Mahlkörper dienen beispielsweise Kugeln aus Zirkonoxid, Zirkonmischoxid, Aluminiumoxid oder Quarz mit einem Durchmesser kleiner als 1 mm; zweckmäßig werden Mahlkörper mit einem Durchmesser von 0,2 bis 1 mm, vorzugsweise 0,3 bis 0,5 mm, verwendet.

Beim Einsatz von kontinuierlichen Rührwerkskugelmühlen zum Feinverteilen erfolgt die Abtrennung der Mahlkörper vom Mahlgut vorzugsweise durch Zentrifugalabscheidung, so daß die Trennvorrichtungen von den Mahlkörpern praktisch nicht berührt werden, wodurch man Verstopfungen der Trennvorrichtungen weitgehend verhindern kann. Die Rührwerkskugelmühlen werden hierbei mit hohem Mahlkörperfüllgrad betrieben. Bei den kontinuierlichen Rührwerkskugelmühlen wird der Mahlraum praktisch vollständig mit Mahlkörpern ausgefüllt.

Für die Mahlung werden zweckmäßigerweise die bei der Synthese, beispielsweise nach der DE-A-2 256 485 (GB-A 1 422 834) und der US-PS 2 284 685 erhältlichen Rohpigmente der β-Phase oder die nach der Reinigung mit Schwefelsäure anfallenden und in die β-Phase überführten hochkristallinen Rohpigmente der β-Phase eingesetzt, die noch geringe Mengen Sulfonsäure- oder Carbonsäuregruppen enthalten können. Nach dem Mahlvorgang a) liegen die eingesetzten Kupferphthalocyaninpigmente als feinteilige Präpigmente vor.

In vielen Fällen ist die α-Phase im Anwendungsmedium instabil, insbesondere wenn sie nicht stabilisiert ist. Nach dem erfindungsgemäßen Verfahren gelingt es, aus einer stabilen β-Phase im Anwendungsmedium eine stabile α-Phase herzustellen. Je nach dem physikalischen Zustand des Rohpigments können zur Phasenumwandlung gegebenenfalls geringe Mengen Alkali oder oberflächenaktive Mittel zugesetzt werden. Zur Ermittlung der geeigneten Bedingungen sind Vorversuche notwendig.

Für den physikalischen Zustand des Rohpigments sind die Reinheit, die Kristallgröße, die Kristallgüte und eventuelle Mischkristallbildungen entscheidend. Im allgemeinen müssen reine und hochkristalline Rohpigmente länger gemahlen werden als verunreinigte und im Kristallgitter gestörte Pigmente.

Die Mahlung wird im wäßrigen oder, falls zur Phasenumwandlung erforderlich, im wäßrigen Medium unter Zusatz von geringen Mengen Alkali oder oberflächenaktiven Mitteln in homogener Mischung durchgeführt. Vorzugsweise wird die Mahlung im alkalischen oder neutralen pH-Bereich durchgeführt.

Organische Lösemittel wirken sich im allgemeinen negativ auf die Phasenumwandlung aus und sollten vermieden werden. In einigen Fällen hat sich gezeigt, daß kleine Mengen organischer Lösemittel tolerierbar sind.

Die Pigmentkonzentration im Mahlgut ist abhängig von der Rheologie der Suspension und beträgt zweckmäßigerweise höchstens 40 Gew.-%, vorzugsweise 10 bis 35 Gew.-%, insbesondere 10 bis 20 Gew.-%, der Mahlsuspension.

Das Mahlgut kann außer der wäßrigen Phase und dem Rohpigment noch weitere übliche Pigmentdispergatoren, kationische, anionische oder nichtionische Tenside, vorzugsweise Fettalkoholpolyglykolether, Alkylphenolpolyglykolether, Alkansulfonsäuren sowie ihre Salze, Alkylphenylsulfonsäuren sowie ihre Salze und Alkylphenolpolyglykolethersulfate, rheologisch wirksame Additive, sowie Entschäumer und andere Zuschlagstoffe (Extender) enthalten.

Die Mahldauer ist abhängig von den Feinheitsanforderungen für das jeweilige Anwendungsgebiet, beispielsweise das Lack-, Druck- oder Kunststoffgebiet. Die Verweilzeit des Mahlguts in der Rührwerkskugelmühle liegt je nach geforderter Feinheit im allgemeinen zwischen 5 und 60 Minuten. Zweckmäßig erweist sich eine Dauer von 5 bis 45 Minuten, vorzugsweise 20 bis 30 Minuten.

Die Mahlung wird bei Temperaturen im Bereich von 0 bis 80°C, zweckmäßig bei einer Temperatur zwischen 5 und 60°C, vorzugsweise bei 15 bis 50°C, durchgeführt.

Die Zugabe der Pigmentdispergatoren der Formel (I) kann auf einmal oder in mehreren Portionen erfolgen. Die Zugabe kann vor, während oder nach der Mahlung a), während oder nach der Finishbehandlung b) oder während oder nach der Isolierung c), im letztgenannten Fall auch durch trockenes Mischen, vorgenommen werden. Der am besten geeignete Zeitpunkt muß zuvor durch orientierende Versuche ermittelt werden. Vorzugsweise wird die Zugabe der Pigmentdispergatoren nach der Mahlung unmittelbar vor dem Lösemittelfinish vorgenommen.

Bevorzugt sind Pigmentdispergatoren der allgemeinen Formel (I), worin X eine Phthalimidomethylengruppe der Formel (IIIh), eine Imidazolylmethylengruppe der Formel (IIIf) oder eine o-Sulfobenzoesäureimidomethylengruppe der Formel (IIIi) bedeutet.

Die erfindungsgemäßen Pigmentdispergatoren werden je nach der Größe der spezifischen Oberfläche des zu dispergierenden Kupferphthalocyaninpigments in Mengen von 0,1 bis 25 Gew.-%, vorzugsweise 1 bis 15 Gew.-%, insbesondere 3 bis 10 Gew.-%, bezogen auf das eingesetzte Kupferphthalocyaninpigment zugesetzt. Auch Gemische von unterschiedlichen Pigmentdispergatoren der Formel (I) lösen die Aufgabe der vorliegenden Erfindung.

Die nach der Mahlung vorliegenden feinteiligen Präpigmentzusammensetzungen werden, gegebenenfalls nach Zugabe der Pigmentdispergatoren der Formel (I), in wäßriger Suspension oder bevorzugt nach Beimischung von organischen Lösemitteln einer thermischen Behandlung (Lösemittelfinish) unterzogen. Es ist auch möglich, die Präpigmentzusammensetzung zu trocknen und wasserfrei in einem oder mehreren der nachstehend genannten Lösemittel einem Lösemittelfinish zu unterziehen.
Als Lösemittel für einen Finish kommen beispielsweise in Frage: C₁-C₁₀-Alkanole wie Methanol, Ethanol, n- oder Isopropanol, n-, tert.- oder Isobutanol; C₁-C₅-Dialkylketone, wie Aceton, Diethylketon, Methylisobutylketon, Methylethylketon, oder cyclische Ketone, wie Cyclohexanon; Ether oder Glykolether, beispielsweise Tetrahydrofuran, Dimethoxiethan, der Monomethyl- oder Monoethylether des Ethylen- oder Propylenglykols, Butylglykol, Ethyldiglykol oder Methoxybutanol; aliphatische Carbonsäureamide wie Formamid oder Dimethylformamid; cyclische Carbonsäureamide wie N-Methylpyrrolidon; Carbonsäureglykolester, Carbonsäure-C₁-C₄-alkylester wie Ameisesäurebutylester, Essigsäureethylester oder Propionsäurepropylester; Phthalsäure- und Benzoesäure-C₁-C₄-alkylester wie Benzoesäureethylester; aliphatische oder heterocyclische Basen wie Methylamin, Ethylamin, Ethanolamin, Diethanolamin, Triethanolamin, Aminopropanole, Aminobutanole, Pyridin, Morpholin oder Picolin; sowie Dimethylsulfoxid oder Sulfolan oder Gemische der vorstehend genannten Lösemittel.
Bevorzugte organische Lösemittel sind Alkanole, insbesondere Ethanol, Propanol, Butanole oder Pentanole. Besonders bevorzugt sind Butanole.

Die für die Durchführung des Lösemittelfinishs einzuhaltenden Bedingungen sind in hohem Maße von den angestrebten Eigenschaften der Pigmentzubereitung abhängig und werden jeweils daraufhin ausgerichtet. Zweckmäßigerweise wird die Suspension der Präpigmentzusammensetzung in dem inerten wäßrigen Medium der Verfahrensstufe a) auf eine Temperatur zwischen 50 und 200°C, unter Atmosphärendruck oder unter erhöhtem Druck, 1 bis 24 Stunden lang erhitzt. Im allgemeinen wird dafür die nach der Naßmahlung erhaltene Suspension ohne Zwischenisolierung des Mahlguts eingesetzt. Es können jedoch auch die vorstehend genannten Lösemittel zugegeben werden, wobei die zugefügte Lösemittelmenge innerhalb weiter Grenzen schwanken kann. Bevorzugt verwendet man die gleiche bis zur 5-fachen Gewichtsmenge Lösemittel, bezogen auf das Gewicht der Präpigmentzusammensetzung. Die thermische Behandlung im wäßrigorganischen Medium erfolgt bevorzugt für die Dauer von 1 bis 6 Stunden bei 50 bis 150°C. Nach beendetem Finish werden die dafür gebrauchten Lösemittel wieder zurückgewonnen und erneut eingesetzt.

Durch die Wahl des organischen Lösemittels, dessen Konzentration, die Auswahl der Temperatur und die Dauer der Finishbehandlung lassen sich je nach dem gewünschten Verwendungszweck Kupferphthalocyaninpigmentzubereitungen herstellen, die entweder eine höhere Transparenz oder eine bessere Deckkraft besitzen.

Die Herstellung von Pigmenten oder Pigmentzubereitungen auf Basis von Kupferphthalocyaninen nach dem erfindungsgemäßen Verfahren hat sich als besonders wirtschaftlich und umweltfreundlich erwiesen, weil bei der Feinverteilung der Rohpigmente durch Naßmahlung keine Verschmutzung der Luft aufgrund von Staubentwicklung auftritt. Außerdem werden nur geringe Mengen der vorstehend genannten Zusatzstoffe und Lösemittel eingesetzt, welche anschließend weiterverarbeitet oder die wieder vollständig regeneriert werden können, so daß keine Entsorgungsprobleme auftreten.

Die nach der vorliegenden Erfindung erhältlichen Pigmentzubereitungen zeichnen sich aus durch ihre hervorragenden coloristischen und rheologischen Eigenschaften, insbesondere der Flockungsstabilität, Dispergierbarkeit, Rheologie, Glanzverhalten, rotstichige Nuance und Farbstärke und ganz besonders durch ihre Phasenstabilität gegenüber aromatischen Lösemitteln, das heißt, die durch das erfindungsgemäße Verfahren von der β-Phase in die α-Phase überführten Kupferphthalocyaninpigmente verbleiben im Anwendungsmedium sogar in Gegenwart von aromatischen Lösemitteln weitestgehend in der α-Phase.

Die erfindungsgemäß hergestellten Pigmentzubereitungen lassen sich zum Pigmentieren von hochmolekularen organischen Materialien natürlicher oder synthetischer Herkunft einsetzen:
Hochmolekulare organische Materialien, die mit den genannten Pigmentzubereitungen pigmentiert werden können, sind beispielsweise Celluloseether und -ester, wie Ethylcellulose, Nitrocellulose, Celluloseacetat oder Cellulosebutyrat, natürliche Harze oder Kunstharze, wie Polymerisationsharze oder Kondensationsharze, z.B. Aminoplaste, insbesondere Harnstoff- und Melaminformaldehydharze, Alkydharze, Acrylharze, Phenoplaste, Polycarbonate, Polyolefine, wie Polystyrol, Polyvinylchlorid, Polyethylen, Polypropylen, Polyacrylnitril, Polyacrylsäureester, Polyamide, Polyurethane oder Polyester, Gummi, Casein, Silikon und Silikonharze, einzeln oder in Mischungen.

Dabei spielt es keine Rolle, ob die erwähnten hochmolekularen organischen Verbindungen als plastische Massen, Schmelzen oder in Form von Spinnlösungen, Lacken, Anstrichstoffen oder Druckfarben vorliegen. Je nach Verwendungszweck erweist es sich als vorteilhaft, die erfindungsgemäß erhaltenen Pigmentzubereitungen als Toner oder in Form von Präparationen oder Dispersionen zu benutzen. Bezogen auf das zu pigmentierende hochmolekulare organische Material setzt man die erfindungsgemäß hergestellten Pigmentzubereitungen in einer Menge von 0,1 bis 10 Gew.-% ein.

Besonders bevorzugte Lacksysteme sind die modernen, wäßrigen Lacke sowie die lösemittelarmen High-Solidlacke mit hohem Festkörperanteil. Geeignet sind auch die herkömmlichen Lacksysteme aus der Klasse der Alkydmelaminharzlacke und Zweikomponentenlacke auf Basis von mit Polyisocyanat vernetzbaren Acrylharzen.

Die erfindungsgemäß hergestellten Pigmentzubereitungen sind in vielen Anwendungsmedien leicht und bis zu hohen Feinheiten dispergierbar. Solche Pigmentdispersionen besitzen eine hohe Flockungsstabilität und Phasenstabilität und zeigen hervorragende rheologische Eigenschaften selbst bei hoher Pigmentierung. Mit ihnen lassen sich Lackierungen und Drucke von hoher Farbstärke, hohem Glanz und hoher Transparenz mit ausgezeichneten Echtheitseigenschaften erzielen.

Zur Beurteilung der Eigenschaften der erfindungsgemäß hergestellten Pigmentzubereitungen auf dem Lacksektor wurden aus der Vielzahl der bekannten Lacke ein aromatenhaltiger Alkydmelaminharzlack (AM) auf Basis eines mittelöligen, nichttrocknenden Alkydharzes aus synthetischen Fettsäuren und Phthalsäureanhydrid sowie eines butanolveretherten Melaminharzes und Anteilen eines nichttrocknenden Alkydharzes auf Basis von Ricinussäure (kurzölig), ein High-Solid-Acrylharzeinbrennlack auf Basis einer nichtwäßrigen Dispersion (TSA) sowie ein wäßriger Lack mit einem Dispergierharz auf Polyurethanbasis (PUR) ausgewählt.
Zur Beurteilung der Eigenschaften der nach der vorliegenden Erfindung hergestellten Pigmentzubereitungen auf dem Kunststoffgebiet wurde aus der Vielzahl der bekannten Kunststoffe Weichpolyvinylchlorid (PVC) ausgewählt. Zur Beurteilung der Eigenschaften der nach der vorliegenden Erfindung hergestellten Pigmentzubereitungen in der Drucktechnik wurden aus der Vielzahl der bekannten Drucksysteme ein Tiefdrucksystem auf Nitrocellulosebasis (NC-Druck) ausgewählt.

Die Bestimmung der Farbstärke und des Farbtons erfolgte nach DIN 55 986. Die Rheologie des Mahlguts nach der Dispergierung (Millbase-Rheologie) wurde anhand der folgenden fünfstufigen Skala bewertet:
- 5: dünnflüssig
- 4: flüssig
- 3: dickflüssig
- 2: leicht gestockt
- 1: gestockt

Nach dem Verdünnen des Mahlguts auf die Pigmentendkonzentration wurde die Viskosität mit dem Viskospatel nach Rossmann, Typ 301 der Firma Erichsen, Iserlohn, beurteilt.

Glanzmessungen erfolgten an Folienaufgüssen unter einem Winkel von 20 ° nach DIN 67 530 (ASTMD 523) mit dem "multigloss"-Glanzmeßgerät der Firma Byk-Mallinckrodt, Wesel.
Die Bestimmung des Pigmentgehalts der Kupferphthalocyaninrohpigmente erfolgte durch Umlösen aus konzentrierter Schwefelsäure.
Die Bestimmung der Kristallphase der Rohpigmente, Pigmente und Pigmentzubereitungen erfolgte durch Röntgenspektroskopie. Die Aufnahme der Röntgenspektren erfolgte durch CuK_{α}-Strahlung.
Die Bestimmung der Kristallphase der Pigmente und Pigmentzubereitungen in den Anwendungsmedien erfolgte durch Spektralphotometrie.
Figur 1 zeigt das Röntgenbeugungsspektrum eines Kupferphthalocyaninpigments der α-Phase, das noch 2,2 % der β-Phase enthält.
Figur 2 zeigt das Röntgenbeugungsspektrum eines grobkristallinen Kupferphthalocyaninrohpigments, das zu 95,5 % in der β-Phase vorliegt.

In den nachstehenden Beispielen beziehen sich Teile jeweils auf Gewichtsteile und Prozente jeweils auf Gewichtsprozente der beschriebenen Substanzen.

### Beispiel 1

In eine Rührwerkskugelmühle mit der in der DE-A-3 716 587 (US-PS 5 062 577) beschriebenen Ausführungsform, die mit 336 Teilen Zirkonmischoxidperlen vom Durchmesser 0,3 bis 0,4 mm als Mahlkörper gefüllt ist, wird eine Suspension aus 85 Teilen Natronlauge (1%ig) und 15 Teilen grobkristallinem Kupferphthalocyaninrohpigment (β-Phase, 95,5 %ig) eindosiert und mit einer Rührwerksumfangsgeschwindigkeit von 15,6 m/s sowie einer spezifischen Leistungsdichte von 3,1 kW pro Liter Mahlraum 30 Minuten lang bei 25°C gemahlen. Anschließend wird die Mahlgutsuspension von den Mahlkörpern abgetrennt, die Mahlkörper mit 210 Teilen Wasser nachgespült und die Mahlgutsuspensionen vereinigt.
Zu dieser Mahlgutsuspension fügt man 1,5 Teile Pigmentdispergator der Formel (I) als 16,0 %igen wasserfeuchten Preßkuchen hinzu. In dieser Formel (I) bedeutet P den in Formel (II) angegebenen Rest, worin Me ein Kupferatom ist und in der X die Phthalimidomethylengruppe der Formel (IIIh) darstellt, in der R⁶, R⁷, R⁸ und R⁹ jeweils ein Wasserstoffatom bedeutet und m die Zahl 1,0 ist. Danach werden 45 Teile Isobutanol (100 %ig) zugesetzt und 24 Stunden bei 25°C gerührt. Man erhitzt zum Sieden, rührt 3 Stunden bei Siedetemperatur und destilliert sodann das Isobutanol durch Erhitzen bis auf 100°C am Übergang azeotrop ab. Nach dem Abkühlen auf 60°C wird die Pigmentzubereitung abgesaugt, mit Wasser gewaschen und bei 80°C getrocknet.

Man erhält 14,6 Teile Pigmentzubereitung (α-Phase, die 3,0% β-Phase enthält), die im AM-Lack farbstarke Lackierungen liefert. Die Rheologie wird mit 2 bis 3 bewertet. Die Viskosität beträgt 16,3 s und die Glanzmessung ergibt den Wert 80. In der Lackierung liegt das Pigment in der gleichen Phasenzusammensetzung vor.

### Beispiel 2

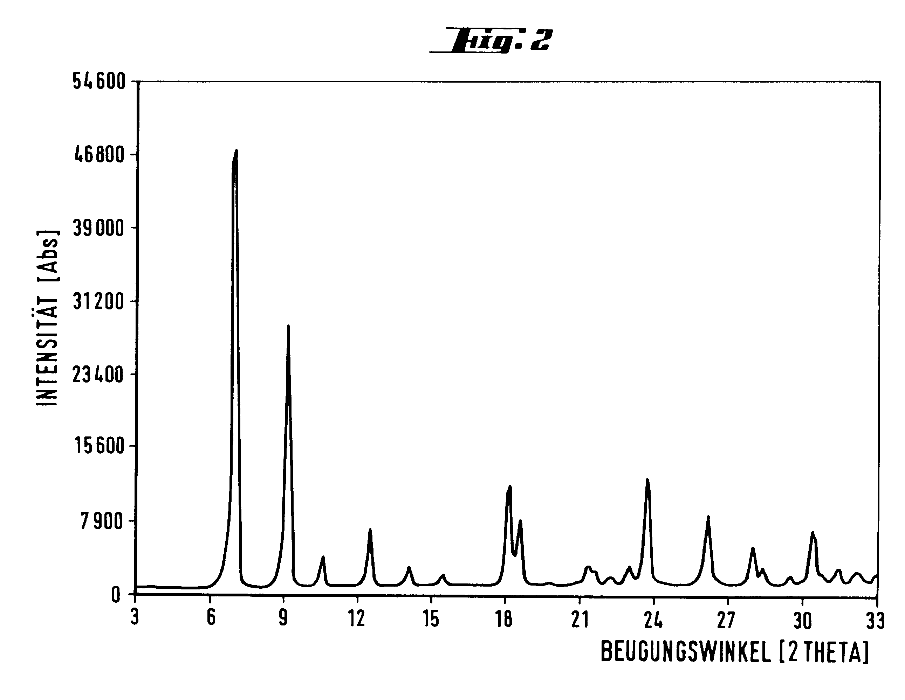

In eine Rührwerkskugelmühle (Hersteller: Draiswerke GmbH, Mannheim), die mit 336 Teilen Zirkonmischoxidperlen vom Durchmesser 0,3 bis 0,4 mm als Mahlkörper gefüllt ist, wird eine Suspension aus 85 Teilen Wasser und 15 Teilen grobkristallinem Kupferphthalocyaninrohpigment (β-Phase, 95,5 %ig, siehe Figur 2) eindosiert und mit einer Rührwerksumfangsgeschwindigkeit von 15,6 m/s sowie einer spezifischen Leistungsdichte von 3,1 kW pro Liter Mahlraum 30 Minuten lang bei 25°C gemahlen. Anschließend wird die Mahlgutsuspension von den Mahlkörpern abgetrennt und die Mahlkörper mit Wasser nachgespült. Die vereinigten Mahlgutsuspensionen werden abgesaugt.

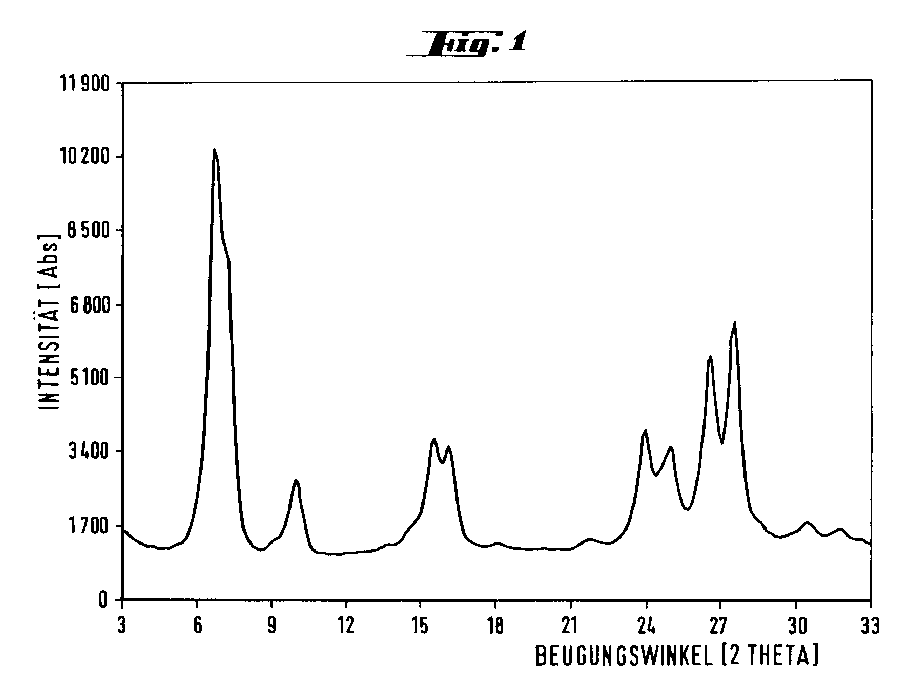

Zur Finishoperation wird der auf dem Filter erhaltene Preßkuchen in 120 Teilen Wasser aufgenommen und 1,5 Teile Pigmentdispergator der Formel (I) als 16,0 %iger wasserfeuchter Preßkuchen hinzugefügt. In der Formel (I) bedeutet P den in Formel (II) angegebenen Rest, worin Me ein Kupferatom ist und in der X die Phthalimidomethylengruppe der Formel (IIIh) darstellt, in der R⁶, R⁷, R⁸ und R⁹ jeweils ein Wasserstoffatom bedeuten und m die Zahl 1,0 ist. Danach werden 45 Teile Isobutanol (100 %ig) zugesetzt und 3 Stunden bei Siedetemperatur gerührt. Anschließend wird das Isobutanol durch Erhitzen bis auf 100 °C am Übergang azeotrop abdestilliert. Nach dem Abkühlen auf 60°C wird die Pigmentzubereitung abgesaugt, mit Wasser gewaschen und bei 80°C getrocknet.
Man erhält 14,8 Teile Pigmentzubereitung (α-Phase, die 2,2% β-Phase enthält, siehe Figur 1), die im AM-Lack farbstarke Lackierungen liefert. Die Rheologie wird mit 2 bis 3 bewertet. Die Viskosität beträgt 18,6 s und die Glanzmessung ergibt den Wert 80. In der Lackierung liegt die Pigmentzubereitung in der gleichen Phasenzusammensetzung vor.

### Vergleichsbeispiel 2 a

Wird das in den Beispielen 1 und 2 eingesetzte Rohpigment gemäß den Angaben in der GB-A-1 096 192 gemahlen und danach wie vorstehend beschrieben gefinisht, so wird ein Pigment erhalten, das zum überwiegenden Anteil in der β-Phase vorliegt und das im AM-Lack um 21 % farbschwächer ist als die erfindungsgemäß hergestellte Pigmentzubereitung.

### Beispiel 3

In eine Rührwerkskugelmühle (Hersteller: Draiswerke GmbH, Mannheim), die mit 336 Teilen Zirkonmischoxidperlen vom Durchmesser 0,3 bis 0,4 mm als Mahlkörper gefüllt ist, wird eine Suspension aus 85 Teilen Wasser und 15 Teilen grobkristallinem Kupferphthalocyaninrohpigment (β-Phase, 95,5 %ig) eindosiert und mit einer Rührwerksumfangsgeschwindigkeit von 15,6 m/s sowie einer spezifischen Leistungsdichte von 3,1 kW pro Liter Mahlraum 30 Minuten lang bei 5 bis 10°C gemahlen. Anschließend wird die Mahlgutsuspension von den Mahlkörpern abgetrennt und die Mahlkörper mit Wasser nachgespült. Die vereinigten Mahlgutsuspensionen werden abgesaugt.

Zur Finishoperation wird der auf dem Filter erhaltene Preßkuchen in 120 Teilen Wasser aufgenommen und 1,5 Teile Pigmentdispergator der Formel (I) als 16,0 %iger wasserfeuchter Preßkuchen hinzugefügt. In der Formel (I) bedeutet P den in Formel (II) angegebenen Rest, worin Me ein Kupferatom ist und in der X die Phthalimidomethylengruppe der Formel (IIIh) darstellt, in der R⁶, R⁷, R⁸ und R⁹ jeweils ein Wasserstoffatom bedeutet und m die Zahl 1,0 ist. Danach werden 45 Teile Isobutanol (100 %ig) zugesetzt und 3 Stunden bei Siedetemperatur gerührt. Anschließend wird das Isobutanol durch Erhitzen bis auf 100°C am Übergang azeotrop abdestilliert. Nach dem Abkühlen auf 60°C wird die Pigmentzubereitung abgesaugt, mit Wasser gewaschen und bei 80°C getrocknet.

Man erhält 14,4 Teile Pigmentzubereitung (α-Phase, die 3,4% β-Phase enthält), die im AM-Lack farbstarke Lackierungen liefert.

### Beispiel 4

In eine Rührwerkskugelmühle (Hersteller: Draiswerke GmbH, Mannheim), die mit 336 Teilen Zirkonmischoxidperlen vom Durchmesser 0,3 bis 0,4 mm als Mahlkörper gefüllt ist, wird eine Suspension aus 85 Teilen Wasser und 15 Teilen grobkristallinem Kupferphthalocyaninrohpigment (β-Phase, 95,5 %ig) eindosiert und mit einer Rührwerksumfangsgeschwindigkeit von 15,6 m/s sowie einer spezifischen Leistungsdichte von 3,1 kW pro Liter Mahlraum 30 Minuten lang bei 25 °C gemahlen. Anschließend wird die Mahlgutsuspension von den Mahlkörpern abgetrennt und die Mahlkörper mit Wasser nachgespült. Die vereinigten Mahlgutsuspensionen werden abgesaugt. Der erhaltene Preßkuchen, in dem das Pigment zu 99% in der α-Phase vorliegt, wird mit 80 Teilen Wasser und 4,5 Teilen Isobutanol 100%ig angerührt und nochmals mit den vorstehend angegebenen Bedingungen gemahlen. Anschließend wird die Mahlgutsuspension von den Mahlkörpern abgetrennt und die Mahlkörper mit Wasser nachgespült. Die vereinigten Mahlgutsuspensionen werden abgesaugt.

Zur Finishoperation wird der auf dem Filter erhaltene Preßkuchen in 120 Teilen Wasser aufgenommen und 1,5 Teile Pigmentdispergator der Formel (I) als 16,0 %iger wasserfeuchter Preßkuchen hinzugefügt. In der Formel (I) bedeutet P den in Formel (II) angegebenen Rest, worin Me ein Kupferatom ist und in der X die Phthalimidomethylengruppe der Formel (IIIh) darstellt, in der R⁶, R⁷, R⁸ und R⁹ jeweils ein Wasserstoffatom bedeutet und m die Zahl 1,0 ist. Danach werden 45 Teile Isobutanol (100 %ig) zugesetzt und 3 Stunden bei Siedetemperatur gerührt. Anschließend wird das Isobutanol durch Erhitzen bis auf 100°C am Übergang azeotrop abdestilliert. Nach dem Abkühlen auf 60°C wird die Pigmentzubereitung abgesaugt, mit Wasser gewaschen und bei 80°C getrocknet.
Man erhält 14,3 Teile Pigmentzubereitung (α-Phase, die weniger als 1% β-Phase enthält), die im AM-Lack farbstarke Lackierungen liefert. In der Lackierung liegt das Pigment in der gleichen Phasenzusammensetzung vor.

### Beispiel 5

In eine Rührwerkskugelmühle (Hersteller: Draiswerke GmbH, Mannheim), die mit 336 Teilen Zirkonmischoxidperlen vom Durchmesser 0,3 bis 0,4 mm als Mahlkörper gefüllt ist, wird eine Suspension aus 85 Teilen wäßrigem Isobutanol (5%ig) und 15 Teilen grobkristallinem Kupferphthalocyaninrohpigment (β-Phase, 95,5 %ig) eindosiert und mit einer Rührwerksumfangsgeschwindigkeit von 15,6 m/s sowie einer spezifischen Leistungsdichte von 3,1 kW pro Liter Mahlraum 30 Minuten lang bei 25°C gemahlen. Anschließend wird die Mahlgutsuspension von den Mahlkörpern abgetrennt und die Mahlkörper mit Wasser nachgespült. Die vereinigten Mahlgutsuspensionen werden abgesaugt. Der erhaltene Preßkuchen, in dem das Pigment als 100%ige β-Phase vorliegt, wird mit 80 Teilen Wasser angerührt und nochmals mit den vorstehend angegebenen Bedingungen gemahlen. Anschließend wird die Mahlgutsuspension von den Mahlkörpern abgetrennt und die Mahlkörper mit Wasser nachgespült. Die vereinigten Mahlgutsuspensionen werden abgesaugt.

Zur Finishoperation wird der auf dem Filter erhaltene Preßkuchen in 120 Teilen Wasser aufgenommen und 1,5 Teile Pigmentdispergator der Formel (I) als 16,0 %iger wasserfeuchter Preßkuchen hinzugefügt. In der Formel (I) bedeutet P den in Formel (II) angegebenen Rest, worin Me ein Kupferatom ist und in der X die Phthalimidomethylengruppe der Formel (IIIh) darstellt, in der R⁶, R⁷, R⁸ und R⁹ jeweils ein Wasserstoffatom bedeutet und m die Zahl 1,0 ist. Danach werden 45 Teile Isobutanol (100 %ig) zugesetzt und 3 Stunden bei Siedetemperatur gerührt. Anschließend wird das Isobutanol durch Erhitzen bis auf 100°C am Übergang azeotrop abdestilliert. Nach dem Abkühlen auf 60°C wird die Pigmentzubereitung abgesaugt, mit Wasser gewaschen und bei 80°C getrocknet.

Man erhält 14,8 Teile Pigmentzubereitung (α-Phase, die weniger als 1% β-Phase enthält), die im AM-Lack farbstarke Lackierungen liefert. In der Lackierung liegt die Pigmentzubereitung in der gleichen Phasenzusammensetzung vor.

### Beispiel 6

In eine Rührwerkskugelmühle (Hersteller: Draiswerke GmbH, Mannheim), die mit 336 Teilen Zirkonmischoxidperlen vom Durchmeser 0,3 bis 0,4 mm als Mahlkörper gefüllt ist, wird eine Suspension aus 90 Teilen Wasser und 10 Teilen grobkristallinem Kupferphthalocyaninrohpigment (bestehend aus 70 % α-Phase und 30 % β-Phase, 91,5 %ig) eindosiert und mit einer Rührwerksumfangsgeschwindigkeit von 15,6 m/s sowie einer spezifischen Leistungsdichte von 3,1 kW pro Liter Mahlraum 20 Minuten lang bei 25°C gemahlen. Anschließend wird die Mahlgutsuspension von den Mahlkörpern abgetrennt und die Mahlkörper mit Wasser nachgespült. Die vereinigten Mahlgutsuspensionen werden abgesaugt.

Zur Finishoperation wird der Filterkuchen in 80 Teilen Wasser aufgenommen und 0,9 Teile Pigmentdispergator der Formel (I) als 16,0 %iger wasserfeuchter Preßkuchen hinzugefügt. In dieser Formel (I) bedeutet P den in Formel (II) angegebenen Rest, worin Me ein Kupferatom ist, und X die Phthalimidomethylengruppe der Formel (IIIh), in der R⁶, R⁷, R⁸ und R⁹ jeweils ein Wasserstoffatom und m die Zahl 1,0 ist. Danach werden 9 Teile Methylamin (40 %ig) zugesetzt und 3 Stunden bei Siedetemperatur gerührt. Anschließend wird das Methylamin durch Erhitzen bis auf 100°C am Übergang abdestilliert. Nach dem Abkühlen auf 60°C wird die Pigmentzubereitung abgesaugt, mit Wasser gewaschen und bei 80°C getrocknet.

Man erhält 10,1 Teile Pigmentzubereitung (α-Phase, die 7,0 % β-Phase enthält), die im AM-Lack farbstarke Ausfärbungen liefert.

### Beispiel 7

In eine Rührwerkskugelmühle (Hersteller: Draiswerke GmbH, Mannheim), die mit 336 Teilen Zirkonmischoxidperlen vom Durchmesser 0,3 bis 0,4 mm als Mahlkörper gefüllt ist, wird eine Suspension aus 85 Teilen Wasser und 15 Teilen grobkristallinem Kupferphthalocyaninrohpigment (β-Phase, 95,5 %ig) eindosiert und mit einer Rührwerksumfangsgeschwindigkeit von 15,6 m/s sowie einer spezifischen Leistungsdichte von 3,1 kW pro Liter Mahlraum 30 Minuten lang bei 25°C gemahlen. Anschließend wird die Mahlgutsuspension von den Mahlkörpern abgetrennt und die Mahlkörper mit Wasser nachgespült. Die vereinigten Mahlgutsuspensionen werden abgesaugt.

Zur Finishoperation wird der auf dem Filter erhaltene Preßkuchen in 120 Teilen Wasser aufgenommen und 1,5 Teile Pigmentdispergator der Formel (I) als 16,0 %iger wasserfeuchter Preßkuchen hinzugefügt. In der Formel (I) bedeutet P den in Formel (II) angegebenen Rest, worin Me ein Kupferatom ist und in der X die Phthalimidomethylengruppe der Formel (IIIh) darstellt, in der R⁶, R⁷, R⁸ und R⁹ jeweils ein Wasserstoffatom bedeutet und m die Zahl 1,0 ist. Danach werden 15 Teile Ethanolamin zugesetzt und 3 Stunden bei Siedetemperatur gerührt. Nach dem Abkühlen auf 60°C wird die Pigmentzubereitung abgesaugt, mit Wasser gewaschen und bei 80°C getrocknet.

Man erhält 15,7 Teile Pigmentzubereitung (α-Phase, die 2,2% β-Phase enthält), die im AM-Lack farbstarke Lackierungen liefert. Im Nitrocellulosetiefdruck werden farbstarke Drucke erhalten.

### Beispiel 8

In eine Rührwerkskugelmühle (Hersteller: Draiswerke GmbH, Mannheim), die mit 336 Teilen Zirkonmischoxidperlen vom Durchmesser 0,3 bis 0,4 mm als Mahlkörper gefüllt ist, wird eine Suspension aus 85 Teilen wäßrigem Isobutanol (1 %ig) und 15 Teilen grobkristallinem Kupferphthalocyaninrohpigment (β-Phase, 95,5 %ig) eindosiert und mit einer Rührwerksumfangsgeschwindigkeit von 15,6 m/s sowie einer spezifischen Leistungsdichte von 3,1 kW pro liter Mahlraum 30 Minuten lang bei 25°C gemahlen. Anschließend wird die Mahlgutsuspension von den Mahlkörpern abgetrennt und die Mahlkörper mit Wasser nachgespült. Die vereinigten Mahlgutsuspensionen werden abgesaugt.

Zur Finishoperation wird der auf dem Filter erhaltene Preßkuchen in 120 Teilen Wasser aufgenommen und 1,5 Teile Pigmentdispergator der Formel (I) als 16,0 %iger wasserfeuchter Preßkuchen
hinzugefügt. In der Formel (I) bedeutet P den in Formel (II) angegebenen Rest, worin Me ein Kupferatom ist und in der X die Phthalimidomethylengruppe der Formel (IIIh) darstellt, in der R⁶, R⁷, R⁸ und R⁹ jeweils ein Wasserstoffatom bedeutet und m die Zahl 1,0 ist. Danach werden 45 Teile Isobutanol (100 %ig) zugesetzt und 3 Stunden bei Siedetemperatur gerührt. Anschließend wird das Isobutanol durch Erhitzen bis auf 100°C am Übergang azeotrop abdestilliert. Nach dem Abkühlen auf 60°C wird die Pigmentzubereitung abgesaugt, mit Wasser gewaschen und bei 80°C getrocknet.

Man erhält 14,8 Teile Pigmentzubereitung (α-Phase, die 2,5% β-Phase enthält), die im AM-Lack farbstarke Lackierungen liefert.

### Beispiel 9

In eine Rührwerkskugelmühle (Hersteller: Draiswerke GmbH, Mannheim), die mit 336 Teilen Zirkonmischoxidperlen vom Durchmesser 0,3 bis 0,4 mm als Mahlkörper gefüllt ist, wird eine Suspension aus 90 Teilen Wasser und 10 Teilen grobkristallinem Kupferphthalocyaninrohpigment (β-Phase, 94,9 %ig) eindosiert und mit einer Rührwerksumfangsgeschwindigkeit von 15,6 m/s sowie einer spezifischen Leistungsdichte von 3,1 kW pro Liter Mahlraum 20 Minuten lang bei 25 °C gemahlen. Anschließend wird die Mahlgutsuspension von den Mahlkörpern abgetrennt und die Mahlkörper mit Wasser nachgespült. Die vereinigten Mahlgutsuspensionen werden abgesaugt.

Zur Finishoperation wird der auf dem Filter erhaltene Preßkuchen in 80 Teilen Wasser aufgenommen und 1,0 Teile Pigmentdispergator der Formel (I) als 16,0 %iger wasserfeuchter Preßkuchen hinzugefügt. In der Formel (I) bedeutet P den in Formel (II) angegebenen Rest, worin Me ein Kupferatom ist und in der X eine Gruppe der Formel (IIIf) darstellt, worin A ein Imidazolylrest ist, R³⁰ eine Methylgruppe ist, R⁴ und R⁵ jeweils ein Wasserstoffatom darstellt und m die Zahl 1,0 ist. Der Pigmentdispergator enthält noch 40% unsubstituiertes Kupferphthalocyanin. Danach werden 10 Teile Methylamin (40 %ig in Wasser) zugesetzt und 3 Stunden bei Siedetemperatur gerührt. Anschließend wird das Methylamin durch Erhitzen bis auf 100°C am Übergang abdestilliert. Nach dem Abkühlen auf 60°C wird die Pigmentzubereitung abgesaugt, mit Wasser gewaschen und bei 80°C getrocknet.

Man erhält 9,9 Teile Pigmentzubereitung (α-Phase, die 7,0% β-Phase enthält), die im AM-Lack farbstarke Lackierungen liefert.

### Beispiel 10

In eine Rührwerkskugelmühle (Hersteller: Draiswerke GmbH, Mannheim), die mit 336 Teilen Zirkonmischoxidperlen vom Durchmesser 0,3 bis 0,4 mm als Mahlkörper gefüllt ist, wird eine Suspension aus 85 Teilen Wasser und 15 Teilen grobkristallinem Kupferphthalocyaninrohpigment (β-Phase, 99,0 %ig) eindosiert und mit einer Rührwerksumfangsgeschwindigkeit von 15,6 m/s sowie einer spezifischen Leistungsdichte von 3,1 kW pro Liter Mahlraum 30 Minuten lang bei 25°C gemahlen. Anschließend wird die Mahlgutsuspension von den Mahlkörpern abgetrennt und die Mahlkörper mit Wasser nachgespült. Die vereinigten Mahlgutsuspensionen werden abgesaugt.

Zur Finishoperation wird der auf dem Filter erhaltene Preßkuchen in 120 Teilen Wasser aufgenommen und 1,5 Teile Pigmentdispergator der Formel (I) als 16,0 %iger wasserfeuchter Preßkuchen hinzugefügt. In der Formel (I) bedeutet P den in Formel (II) angegebenen Rest, worin Me ein Kupferatom ist und in der X die Phthalimidomethylengruppe der Formel (IIIh) darstellt, in der R⁶, R⁷, R⁸ und R⁹ jeweils ein Wasserstoffatom bedeutet und m die Zahl 1,0 ist. Danach werden 45 Teile Isobutanol (100 %ig) zugesetzt und 3 Stunden bei Siedetemperatur gerührt. Anschließend wird das Isobutanol durch Erhitzen bis auf 100°C am Übergang azeotrop abdestilliert. Nach dem Abkühlen auf 60°C wird die Pigmentzubereitung abgesaugt, mit Wasser gewaschen und bei 80°C getrocknet.

Man erhält 14,7 Teile Pigmentzubereitung (α-Phase, die 9,2% β-Phase enthält), die im AM-Lack farbstarke Lackierungen liefert.

### Beispiel 11

In eine Rührwerkskugelmühle (Hersteller: Draiswerke GmbH, Mannheim), die mit 336 Teilen Zirkonmischoxidperlen vom Durchmesser 0,3 bis 0,4 mm als Mahlkörper gefüllt ist, wird eine Suspension aus 85 Teilen Natronlauge (1 %ig) und 15 Teilen grobkristallinem Kupferphthalocyaninrohpigment (β-Phase, 95,5 %ig) eindosiert und mit einer Rührwerksumfangsgeschwindigkeit von 15,6 m/s sowie einer spezifischen Leistungsdichte von 3,1 kW pro Liter Mahlraum 30 Minuten lang bei 25°C gemahlen. Anschließend wird die Mahlgutsuspension von den Mahlkörpern abgetrennt und die Mahlkörper mit Wasser nachgespült. Die vereinigten Mahlgutsuspensionen werden abgesaugt.

Zur Finishoperation wird der auf dem Filter erhaltene Preßkuchen in 120 Teilen Wasser aufgenommen, 0,75 Teile Pigmentdispergator der Formel (I), in der P den in Formel (II) angegebenen Rest bedeutet und worin Me ein Kupferatom ist, X die o-Sulfobenzoesäureimidomethylengruppe der Formel (IIIi) darstellt, R¹⁰ und R¹¹ jeweils ein Wasserstoffatom bedeutet und m die Zahl 1,0 ist und der noch 50 % unsubstituiertes Kupferphthalocyanin enthält, werden als 19,4 %iger wasserfeuchter Preßkuchen hinzugefügt, mit 45 Teilen Isobutanol (100 %ig) versetzt und 24 Stunden bei 25°C gerührt. Man erhitzt zum Sieden, rührt 3 Stunden bei Siedetemperatur und destilliert sodann das Isobutanol durch Erhitzen bis auf 100°C am Übergang azeotrop ab. Nach dem Abkühlen auf 60°C wird die Pigmentzubereitung abgesaugt, mit Wasser gewaschen und bei 80°C getrocknet.

Man erhält 14,6 Teile Pigmentzubereitung (α-Phase, die 2,2% β-Phase enthält), die im PUR-Lack farbstarke Lackierungen liefert. Die Rheologie wird mit 5 bewertet. Die Viskosität beträgt 2,8 s und die Glanzmessung ergibt den Wert 86. In PVC werden farbstarke Ausfärbungen erhalten.

### Beispiel 12

In eine Rührwerkskugelmühle (Hersteller: Draiswerke GmbH, Mannheim), die mit 336 Teilen Zirkonmischoxidperlen vom Durchmesser 0,3 bis 0,4 mm als Mahlkörper gefüllt ist, wird eine Suspension aus 85 Teilen Wasser und 15 Teilen grobkristallinem Kupferphthalocyaninrohpigment (β-Phase, 95,5 %ig) eindosiert und mit einer Rührwerksumfangsgeschwindigkeit von 15,6 m/s sowie einer spezifischen Leistungsdichte von 3,1 kW pro Liter Mahlraum 30 Minuten lang bei 25 °C gemahlen. Anschließend wird die Mahlgutsuspension von den Mahlkörpern abgetrennt und die Mahlkörper mit Wasser nachgespült. Die vereinigten Mahlgutsuspensionen werden abgesaugt.

Zur Finishoperation wird der auf dem Filter erhaltene Preßkuchen in 120 Teilen Wasser aufgenommen. Danach werden 45 Teile Isobutanol (100 %ig) zugesetzt und 3 Stunden bei Siedetemperatur gerührt. Anschließend wird das Isobutanol durch Erhitzen bis auf 100°C am Übergang azeotrop abdestilliert. Nach dem Abkühlen auf 60°C wird das Pigment abgesaugt, mit Wasser gewaschen und bei 80°C getrocknet.

Man erhält 14,8 Teile Pigmentzubereitung (α-Phase, die 4,6% β-Phase enthält).

9,0 Teile Pigment werden mechanisch mit 1,0 Teilen Pigmentdispergator der allgemeinen Formel (I) gemischt. In der Formel (I) bedeutet P den in Formel (II) angegebenen Rest, worin Me ein Kupferatom ist und in der X die Gruppe der Formel (IIIf) darstellt, worin A der Imidazolylrest ist, R³⁰eine Methylgruppe ist, R⁴ und R⁵ jeweils ein Wasserstoffatom darstellt und m die Zahl 1,0 ist. Der Pigmentdispergator enthält noch 40% unsubstituiertes Kupferphthalocyanin.

Es wird eine Pigmentzubereitung erhalten, die im TSA-Lack farbstarke Lackierungen liefert.

### Beispiel 13

In eine Rührwerkskugelmühle (Hersteller: Draiswerke GmbH, Mannheim), die mit 336 Teilen Zirkonmischoxidperlen vom Durchmesser 0,3 bis 0,4 mm als Mahlkörper gefüllt ist, wird eine Suspension aus 90 Teilen Wasser und 10 Teilen grobkristallinem Kupferphthalocyaninrohpigment (β-Phase, 94,9 %ig) eindosiert und mit einer Rührwerksumfangsgeschwindigkeit von 15,6 m/s sowie einer spezifischen Leistungsdichte von 3,1 kW pro Liter Mahlraum 60 Minuten lang bei 25°C gemahlen. Anschließend wird die Mahlgutsuspension von den Mahlkörpern abgetrennt und die Mahlkörper werden mit Wasser nachgespült. Die vereinigten Mahlgutsuspensionen werden abgesaugt.

Zur Finishoperation wird der auf dem Filter erhaltene Preßkuchen in 80 Teilen Wasser aufgenommen und 1,0 Teile Pigmentdispergator der Formel (I) als 16,0 %iger wasserfeuchter Preßkuchen hinzugefügt. In der Formel (I) bedeutet P den in Formel (II) angegebenen Rest, worin Me ein Kupferatom ist und in der X eine Gruppe der Formel (IIIf) darstellt, worin A der Imidazolylrest ist, R³ eine Methylgruppe ist, R⁴ und R⁵ jeweils ein Wasserstoffatom darstellt und m die Zahl 1,0 ist. Der Pigmentdispergator enthält noch 40% unsubstituiertes Kupferphthalocyanin. Es wird 1 Stunde gerührt, abgesaugt und bei 80°C getrocknet. Man erhält 10,9 Teile Präpigmentzubereitung. Diese wird in 100 Teilen Ethylglykol aufgenommen und 5 Stunden bei 135°C gerührt. Nach dem Abkühlen auf 60°C wird abgesaugt, mit Ethanol nachgewaschen und bei 80°C getrocknet.

Man erhält 10,3 Teile Pigmentzubereitung (α-Phase, die keine β-Phase enthält), die im AM-Lack farbstarke Lackierungen liefert.

### Beispiel 14

In eine Rührwerkskugelmühle (Hersteller: Draiswerke GmbH, Mannheim), die mit 336 Teilen Zirkonmischoxidperlen vom Durchmesser 0,3 bis 0,4 mm als Mahlkörper gefüllt ist, wird eine Suspension aus 85 Teilen Wasser, 15 Teilen grobkristallinem Kupferphthalocyaninrohpigment (β-Phase, 95,5 %ig) und 1,5 Teilen Dodecylbenzolsulfonsäure eindosiert und mit einer Rührwerksumfangsgeschwindigkeit von 15,6 m/s sowie einer spezifischen Leistungsdichte von 3,1 kW pro Liter Mahlraum 30 Minuten lang bei 25 °C gemahlen. Anschließend wird die Mahlgutsuspension von den Mahlkörpern abgetrennt und die Mahlkörper mit Wasser nachgespült. Die vereinigten Mahlgutsuspensionen werden abgesaugt.

Zur Finishoperation wird der auf dem Filter erhaltene Preßkuchen in 120 Teilen Wasser aufgenommen und 3,0 Teile Pigmentdispergator der Formel (I) als 16,0 %iger wasserfeuchter Preßkuchen hinzugefügt. In der Formel (I) bedeutet P den in Formel (II) angegebenen Rest, worin Me ein Kupferatom ist und in der X die Phthalimidomethylengruppe der Formel (IIIh) darstellt, in der R⁶, R⁷, R⁸ und R⁹ jeweils ein Wasserstoffatom bedeutet und m die Zahl 1,0 ist. Danach werden 45 Teile Isobutanol (100 %ig) zugesetzt und 3 Stunden bei Siedetemperatur gerührt. Anschließend wird das Isobutanol durch Erhitzen bis auf 100 °C am Übergang azeotrop abdestilliert. Nach dem Abkühlen auf 60°C wird die Pigmentzubereitung abgesaugt, mit Wasser gewaschen und bei 80°C getrocknet.

Man erhält 15,9 Teile Pigmentzubereitung (α-Phase, die 1,7% β-Phase enthält), die im AM-Lack farbstarke Lackierungen liefert.

## Patentansprüche

1. Verfahren zur Herstellung eines Kupferphthalocyaninpigments der α-Phase oder einer Pigmentzubereitung auf Basis eines Kupferphthalocyaninpigmentes in der α-Phase, dadurch gekennzeichnet, daß man ein Kupferphthalocyaninpigment, das überwiegend in der β-Phase vorliegt,
a) zunächst in einem wäßrigen Medium das geringe Mengen von <5 Gew.-% eines organischen Lösemittels enthalten darf, in einer Rührwerkskugelmühle, die mit einer Leistungsdichte von mehr als 2,5 kW pro Liter Mahlraum und einer Rührwerksumfangsgeschwindigkeit von mehr als 12 m/s betrieben wird, unter der Einwirkung von Mahlkörpern mit einem Durchmesser kleiner als 1 mm naßvermahlt, anschließend
b) die nach a) erhaltene Präpigmentzusammensetzung
b1) entweder in Form der so erhaltenen Mahlgutsuspension; oder
b2) nach Zusatz eines organischen Lösemittels zu der nach a) erhaltenen Mahlgutsuspension; oder
b3) im Falle einer Zwischenisolierung des Präpigments oder der Präpigmentzusammensetzung, nach vorheriger Wiederaufnahme in einem inerten organischen Lösemittel
einer Finishbehandlung bei erhöhter Temperatur unterwirft, und
c) anschließend das resultierende Pigment oder die Pigmentzubereitung isoliert.

2. Verfahren nach Anspruch 1, dadurch gekennzeichnet, daß vor, während oder nach einem oder mehreren der Teilschritte a), b) und c) einmal oder mehrmals mindestens ein Pigmentdispergator der Formel (I)
P ― Xₘ (I)
zugegeben wird, in welcher
P für einen m-wertigen Rest auf Basis der Formel (II) 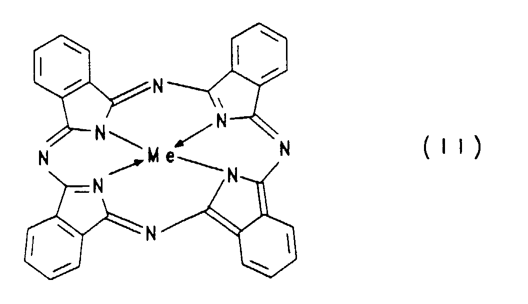 steht, worin
m eine Zahl von 1 bis 6 ist,
Me zwei Wasserstoffatome oder ein zweiwertiges Metallatom, vorzugsweise ein Kupfer-, Eisen-, Zink-, Nickel-, Kobalt- oder Zinnatom, insbesondere ein Kupferatom, bedeutet und
X eine Gruppe der Formel (IIIa)
-COOM (IIIa)
oder eine Gruppe der Formel (IIIb)
-SO₃M (IIIb)
darstellt, worin M ein Wasserstoffatom oder ein Äquivalent eines Alkali-, Erdalkali- oder Ammoniumions bedeutet oder worin
X eine Gruppe der Formel (IIIc) 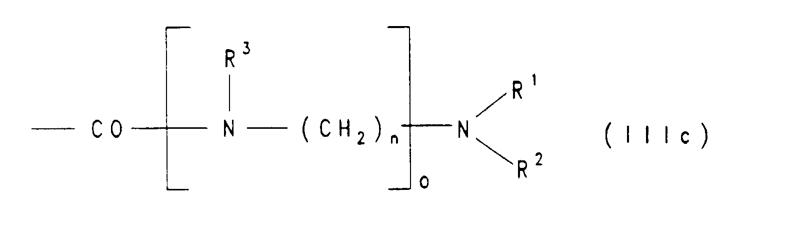 oder eine Gruppe der Formel (IIId) 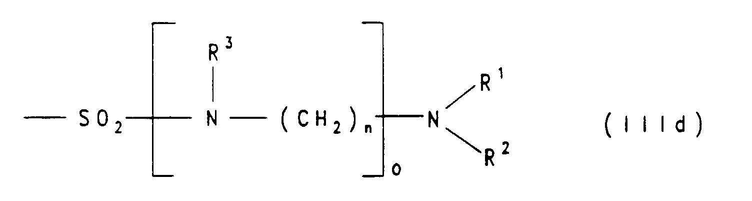 darstellt, worin R¹ und R² gleich oder verschieden sind und ein Wasserstoffatom, eine C₁-C₂₀-Alkyl-, C₂-C₂₀-Alkenylgruppe oder eine C₅-C₇-Cycloalkylgruppe, vorzugsweise ein Wasserstoffatom, eine Methyl- oder Ethylgruppe, bedeuten oder worin R¹ und R² gemeinsam mit dem angrenzenden Stickstoffatom ein aliphatisches oder aromatisches, fünf- bis siebengliedriges heterocyclisches System mit jeweils 1 bis 3 ringangehörigen, gleichen oder unterschiedlichen Heteroatomen aus der Reihe Stickstoff, Sauerstoff oder Schwefel bilden, vorzugsweise Imidazol, Piperidin, Piperazin, Pyrrolidin, Morpholin, Imidazolin und Hexamethylenimin,
R³ ein Wasserstoffatom oder eine C₁-C₄-Alkylgruppe, vorzugsweise ein Wasserstoffatom oder eine Methylgruppe, ist,
n eine Zahl von 1 bis 6, vorzugsweise 2 oder 3,
o die Zahl 0 oder 1, vorzugsweise 1, und
m eine Zahl von 1 bis 4 sind, oder worin
X eine Aminomethylengruppe der Formel (IIIe) 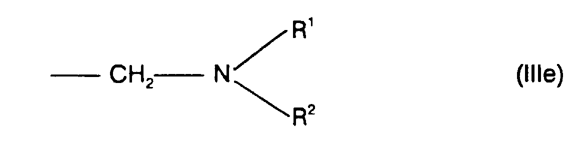 darstellt, worin R¹ und R² die vorstehend angegebene Bedeutung haben und m eine Zahl von 1 bis 6 ist, oder worin
X eine Gruppe der Formel (IIIf) 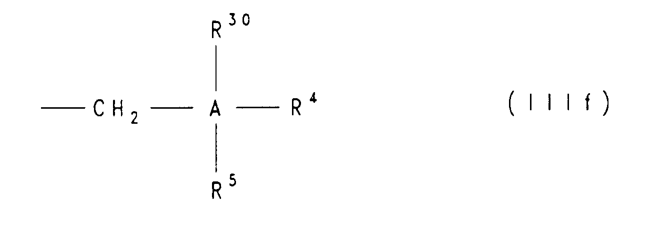 darstellt, worin A einen fünf- oder sechsgliedrigen aromatischen Ring oder einen kondensierten aromatischen Heterocyclus darstellt, welcher 1 bis 3 gleiche oder unterschiedliche Heteroatome aus der Reihe Stickstoff, Sauerstoff oder Schwefel enthält, vorzugsweise Imidazol, Triazol oder Pyrazol darstellt, und der Heterocyclus über ein Kohlenstoffatom an die Methylengruppe gebunden ist,
R³⁰ und R⁴ ein Wasserstoffatom, eine C₁-C₄-Alkyl-, C₁-C₄-Hydroxyalkyl- oder eine C₂-C₄-Alkenylgruppe, vorzugsweise ein Wasserstoffatom, Methyl, Ethyl oder C₂H₄OH, oder eine Arylgruppe bedeuten, wobei Aryl für unsubstituiertes oder für mit 1 bis 4 Resten aus der Gruppe C₁-C₆-Alkyl, Halogen, vorzugsweise F, Cl oder Br, C₁-C₆-Alkoxy, Cyan, CONH₂ und COOR¹², wobei R¹² Wasserstoff oder C₁-C₆-Alkyl bedeutet, substituiertes Phenyl steht,
R³⁰ und R⁴ gemeinsam auch einen aliphatischen oder aromatischen Ring, vorzugsweise einen Phenylring, bilden können,
R⁵ ein Wasserstoffatom, eine C₁-C₄-Alkyl-, eine C₁-C₃-Hydroxyalkyl- oder eine C₂-C₄-Alkenylgruppe bedeutet und
m eine Zahl von 1 bis 4 ist, oder worin
X eine Gruppe der Formel (IIIg) 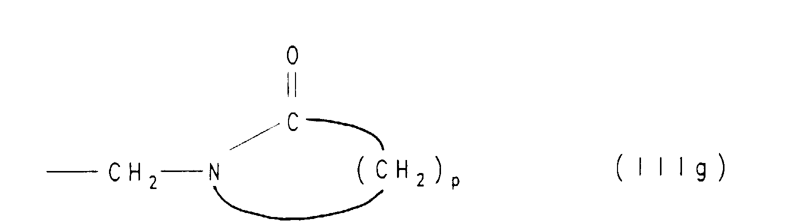 darstellt, wobei p eine Zahl von 3 bis 6, vorzugsweise 3 bis 5, und m eine Zahl von 1 bis 4 ist, oder worin
X eine Phthalimidomethylengruppe der Formel (IIIh) 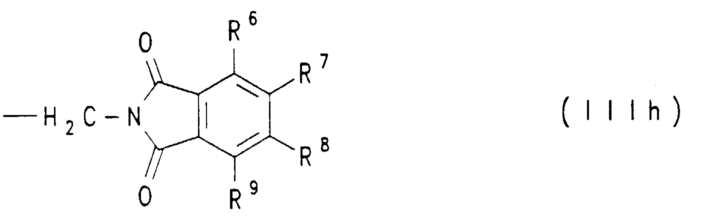 darstellt, wobei R⁶, R⁸ und R⁹ gleich oder verschieden sind und ein Wasserstoff-, Fluor-, Chlor- oder Bromatom, vorzugsweise ein Wasserstoffatom, bedeuten, R⁷ ein Wasserstoff-, Fluor, Chlor- oder Bromatom ist oder eine Nitro-, C₁-C₆-Alkyl-, C₁-C₆-Alkoxy- oder Benzoylaminogruppe, vorzugsweise ein Wasserstoffatom, bedeutet, und
m eine Zahl von 1 bis 4 ist, oder worin
X eine o-Sulfobenzoesäureimidomethylengruppe der Formel (IIIi) 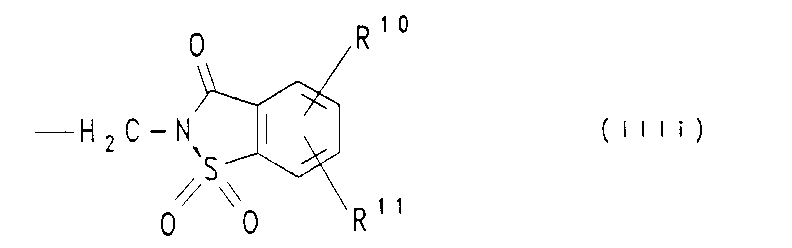 darstellt, wobei R¹⁰ und R¹¹ gleich oder verschieden sind und ein Wasserstoff-, Chlor- oder Bromatom oder eine C₁-C₄-Alkyl-, C₁-C₄-Alkoxy- oder eine Nitrogruppe, vorzugsweise ein Wasserstoffatom, bedeuten und
m eine Zahl von 1 bis 4 ist, oder worin
X eine Gruppe der Formel (IIIk) 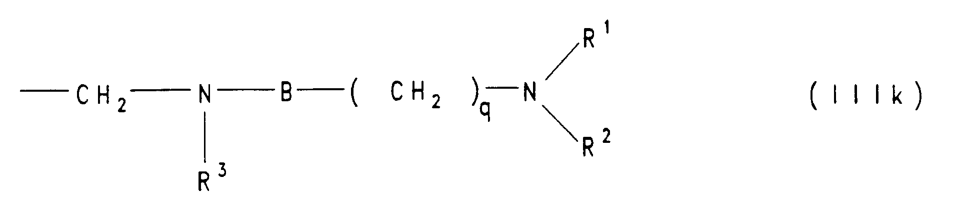 darstellt, in der B eine Carbonyl- oder Suffonylgruppe, vorzugsweise eine Carbonylgruppe, ist und R¹, R² und R³ die vorstehend angegebene Bedeutung besitzen,
q die Zahl 1 oder 2, vorzugsweise 1, und
m eine Zahl von 1 bis 4 ist,
oder daß mindestens ein Pigmentdispergator der Formel (I) zugegeben wird, der in einem Molekül verschiedene der vorstehend angegebenen Reste X enthält.

3. Verfahren gemäß Anspruch 1 oder 2, dadurch gekennzeichnet, daß man Mahlkörper vom Durchmesser 0,2 bis 1,0 mm, vorzugsweise 0,3 bis 0,5 mm, einsetzt.

4. Verfahren nach mindestens einem der Ansprüche 1 bis 3, dadurch gekennzeichnet, daß in der Rührwerkskugelmühle das Verhältnis von Mahlraum zu Mahlraumoberfläche kleiner als 0,15:1 (dm³:dm²) ist.

5. Verfahren nach mindestens einem der Ansprüche 1 bis 4, dadurch gekennzeichnet, daß die Pigmentkonzentration in der Mahlgutsuspension höchstens 40 Gew.-%, vorzugsweise 10 bis 35 Gew.-%, insbesondere 10 bis 20 Gew.-%, beträgt.

6. Verfahren nach mindestens einem der Ansprüche 1 bis 5, dadurch gekennzeichnet, daß man die Naßmahlung im neutralen oder im alkalischen pH-Bereich durchführt.

7. Verfahren nach mindestens einem der Ansprüche 1 bis 6, dadurch gekennzeichnet, daß man die Finishbehandlung in einem Gemisch aus Wasser und einem Alkanol, vorzugsweise einem Butanol, durchführt.

8. Verfahren nach mindestens einem der Ansprüche 1 bis 7, dadurch gekennzeichnet, daß man hochkristalline Kupferphthalocyaninrohpigmente der β-Phase einsetzt, die noch geringe Mengen Carbonsäure- oder Sulfonsäuregruppen enthalten können.

9. Verfahren nach mindestens einem der Ansprüche 1 bis 8, dadurch gekennzeichnet, daß man als Pigmentdispergator mindestens eine Verbindung der Formel (I) einsetzt, in welcher
P die in Anspruch 1 ausgewiesene Bedeutung besitzt,
X eine Phthalimidomethylengruppe der Formel (IIIh) 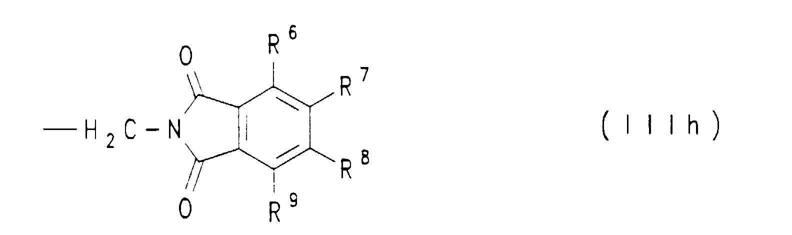 darstellt, wobei R⁶, R⁷, R⁸ und R⁹ jeweils ein Wasserstoffatom bedeutet, und m eine Zahl von 1 bis 4 ist.

10. Verfahren nach mindestens einem der Ansprüche 1 bis 8, dadurch gekennzeichnet, daß man als Pigmentdispergator mindestens eine Verbindung der Formel (I) einsetzt, in welcher
P die in Anspruch 1 ausgewiesene Bedeutung besitzt,
X eine o-Sulfobenzoesäureimidomethylengruppe der Formel (IIIi) 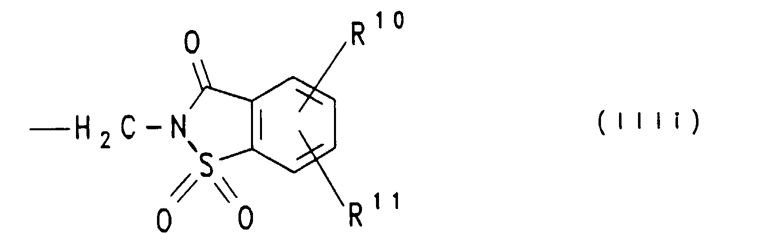 darstellt, wobei R¹⁰ und R¹¹ jeweils ein Wasserstoffatom bedeutet und
m eine Zahl von 1 bis 4 ist.

11. Verfahren nach mindestens einem oder mehreren der Ansprüche 1 bis 8, dadurch gekennzeichnet, daß man als Pigmentdispergator mindestens eine Verbindung der Formel (I) einsetzt, in welcher
P die in Anspruch 1 ausgewiesene Bedeutung besitzt,
X eine Gruppe der Formel (IIIf) 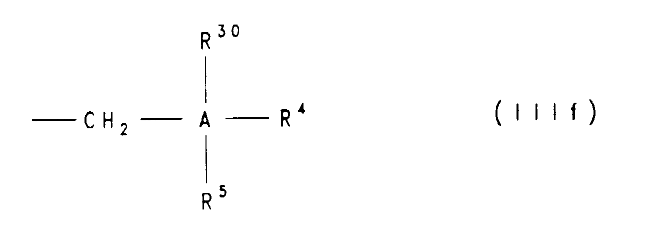 darstellt, worin A einen Imidazol-, Triazol- oder Pyrazolrest bedeutet und der genannte Heterocyclus über ein Kohlenstoffatom an die Methylengruppe gebunden ist, R³⁰ und R⁴ ein Wasserstoffatom, eine Methyl-, Ethyl- oder C₂H₄OH-Gruppe ist oder wobei R³⁰ und R⁴ gemeinsam einen Phenylrest bilden,
R⁵ ein Wasserstoffatom, eine C₁-C₄-Alkyl-, eine C₁-C₃-Hydroxyalkyl- oder eine C₂-C₄-Alkenylgruppe bedeutet und m eine Zahl von 1 bis 4 ist.

12. Verfahren nach mindestens einem der Ansprüche 1 bis 11, dadurch gekennzeichnet, daß man ein Gemisch von unterschiedlichen Pigmentdispergatoren der Formel (I) einsetzt.

13. Verfahren nach mindestens einem der Ansprüche 1 bis 12, dadurch gekennzeichnet, daß die Pigmentdispergatoren der Formel (1) in Mengen von 0, bis 25 Gew.-%, vorzugsweise 1 bis 15 Gew.-%, insbesondere 3 bis 10 Gew.-%, bezogen auf das eingesetzte Kupferphthalocyaninpigment, vorhanden sind.

## Claims

1. A process for the preparation of a copper phthalocyanine pigment of the α phase or a pigment preparation based on a copper phthalocyanine pigment in the α phase, which comprises
a) first wet milling a predominantly β phase copper phthalocyanine pigment in an aqueous medium, which may contain small amounts of < 5% by weight of an organic solvent, in a stirred ball mill which is operated at a power density of more than 2.5 kW per liter of milling space and a peripheral speed of the stirrer of more than 12 m/s with exposure to grinding media having a diameter of less than 1 mm, then
b) subjecting the prepigment composition obtained by a)
b1) either in the form of the mill base suspension thus obtained; or
b2) after addition of an organic solvent to the mill base suspension obtained by a); or
b3) in the case where the prepigment intermediate or the prepigment composition intermediate is isolated, after prior retakeup in an inert organic solvent
to a finishing treatment at elevated temperature, and
c) then isolating the resulting pigment or pigment preparation.

2. The process as claimed in claim 1, wherein there is added one or more times, before, during or after one or more of the individual steps a), b) and c), at least one pigment dispersant of the formula (I)
P ― Xₘ (I)
in which
P is an m-valent radical based on the formula (II) 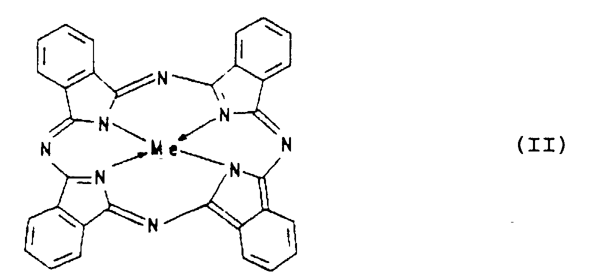 in which
m is from 1 to 6,
Me is two hydrogen atoms or a divalent metal atom, preferably a copper, iron, zinc, nickel, cobalt or tin atom, in particular a copper atom, and
X is a group of the formula (IIIa)
-COOM (IIIa)
or a group of the formula (IIIb)
-SO₃M (IIIb)
in which M is a hydrogen atom or one equivalent of an alkali metal ion, alkaline earth metal ion or ammonium ion or in which
X is a group of the formula (IIIc) 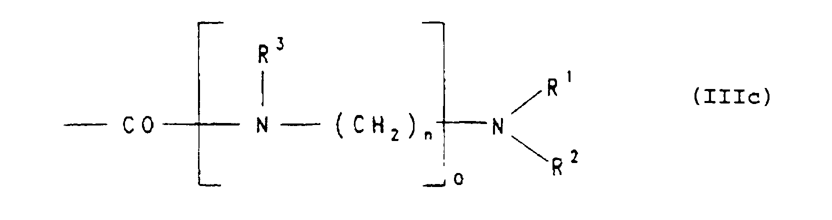 or a group of the formula (IIId) 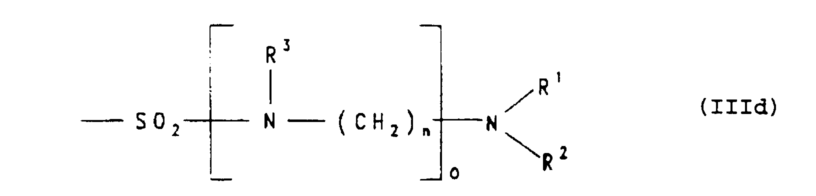 in which R¹ and R² are identical or different and are each a hydrogen atom, a C₁-C₂₀-alkyl, C₂-C₂₀-alkenyl group or a C₅-C₇-cycloalkyl group, preferably a hydrogen atom, a methyl or ethyl group, or in which R¹ and R² together with the adjacent nitrogen atom form an aliphatic or aromatic, five- to seven-membered heterocyclic system having in each case 1 to 3 identical or different ring heteroatoms selected from the group consisting of nitrogen, oxygen and sulfur, preferably imidazole, piperidine, piperazine, pyrrolidine, morpholine, imidazoline and hexamethyleneimine,
R³ is a hydrogen atom or a C₁-C₄-alkyl group, preferably a hydrogen atom or a methyl group,
n is from 1 to 6, preferably 2 or 3,
o is 0 or 1, preferably 1, and
m is from 1 to 4, or in which
X is an aminomethylene group of the formula (IIIe) 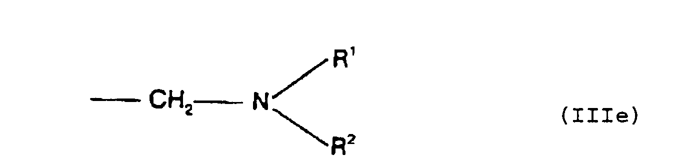 in which R¹ and R² have the abovementioned meanings and m is from 1 to 6, or in which
X is a group of the formula (IIIf) 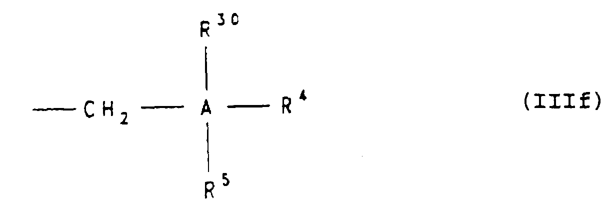 in which A is a five- or six-membered aromatic ring or a fused aromatic heterocycle composed of 1 to 3 identical or different heteroatoms selected from the group consisting of nitrogen, oxygen and sulfur, preferably imidazole, triazole or pyrazole, and the heterocycle is attached to the methylene group via a carbon atom,
R³⁰ and R⁴ are each a hydrogen atom, a C₁-C₄-alkyl, C₁-C₄-hydroxyalkyl or a C₂-C₄-alkenyl group, preferably a hydrogen atom, methyl, ethyl or C₂H₄OH, or an aryl group, aryl being phenyl which is unsubstituted or substituted by 1 to 4 radicals from the group consisting of C₁-C₆-alkyl, halogen, preferably F, Cl or Br, C₁-C₆-alkoxy, cyano, CONH₂ and COOR¹², R¹² being hydrogen or C₁-C₆-alkyl,
R³⁰ and R⁴ together can also form an aliphatic or aromatic ring, preferably a phenyl ring,
R⁵ is a hydrogen atom, a C₁-C₄-alkyl, a C₁-C₃-hydroxyalkyl or a C₂-C₄-alkenyl group and
m is from 1 to 4, or in which
X is a group of the formula (IIIg) 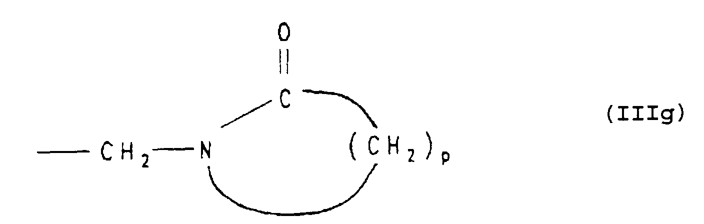 p being from 3 to 6, preferably 3 to 5, and m being from 1 to 4, or in which
X is a phthalimidomethylene group of the formula (IIIh) 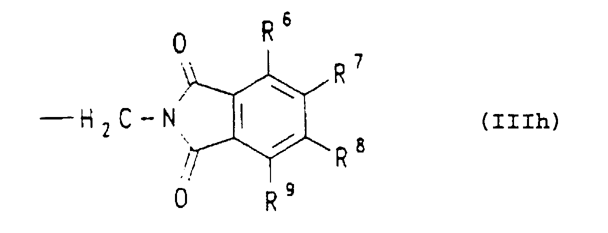 in which R⁶, R⁸ and R⁹ are identical or different and are each a hydrogen, fluorine, chlorine or bromine atom, preferably a hydrogen atom, R⁷ is a hydrogen, fluorine, chlorine or bromine atom or is a nitro, C₁-C₆-alkyl, C₁-C₆-alkoxy or benzoylamino group, preferably a hydrogen atom,
m is from 1 to 4, or in which and
X is an o-sulfobenzimidomethylene group of the formula (IIIi) 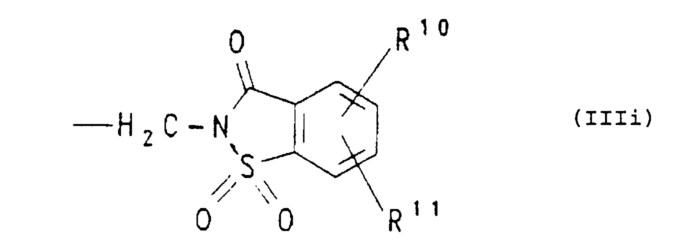 in which R¹⁰ and R¹¹ are identical or different and are each a hydrogen, chlorine or bromine atom or a C₁-C₄-alkyl, C₁-C₄-alkoxy or a nitro group, preferably a hydrogen atom, and
m is from 1 to 4, or in which
X is a group of the formula (IIIk) 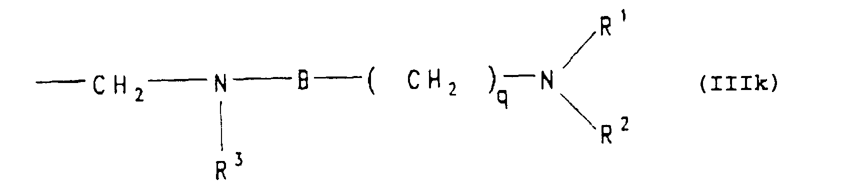 in which B is a carbonyl or sulfonyl group, preferably a carbonyl group, and R¹, R² and R³ have the abovementioned meanings,
q is 1 or 2, preferably 1, and
m is from 1 to 4,
or there is added at least one pigment dispersant of the formula (I) containing various of the above-mentioned radical X in one molecule.

3. The process as claimed in claim 1 or 2, wherein grinding media of diameter 0.2 to 1.0 mm, preferably 0.3 to 0.5 mm, are used.

4. The process as claimed in at least one of claims 1 to 3, wherein the ratio of milling space to surface area of the milling space in the stirred ball mill is less than 0.15:1 (dm³:dm²).

5. The process as claimed in at least one of claims 1 to 4, wherein the pigment concentration in the mill base suspension is at most 40% by weight, preferably 10 to 35% by weight, in particular 10 to 20% by weight.

6. The process as claimed in at least one of claims 1 to 5, wherein wet milling is carried out in a neutral or in an alkaline pH range.

7. The process as claimed in at least one of claims 1 to 6, wherein the finishing treatment is carried out in a mixture of water and an alkanol, preferably a butanol.

8. The process as claimed in at least one of claims 1 to 7, wherein highly crystalline crude copper phthalocyanine pigments of the β phase which may still contain small amounts of carboxyl or sulfonyl groups are used.

9. The process as claimed in at least one of claims 1 to 8, wherein at least one compound of the formula (I) in which
P has the meaning shown in claim 2,
X is a phthalimidomethylene group of the formula (IIIh) 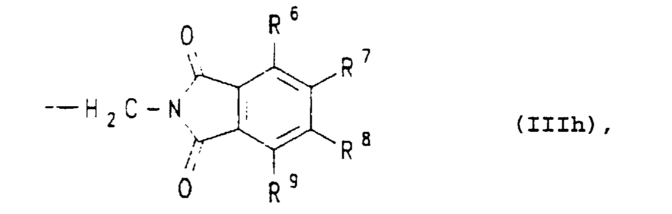 R⁶, R⁷, R⁸ and R⁹ each being a hydrogen atom and m being from 1 to 4, is used as the pigment dispersant.

10. The process as claimed in at least one of claims 1 to 8, wherein at least one compound of the formula (I) in which
P has the meaning shown in claim 2,
X is an o-sulfobenzimidomethylene group of the formula (IIIi) 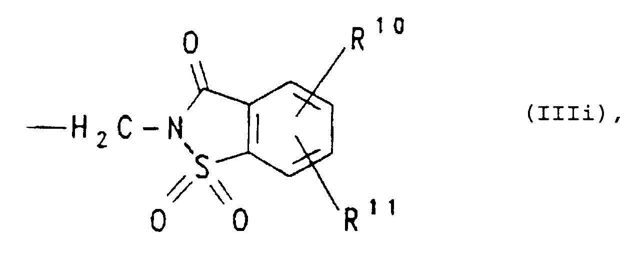 R¹⁰ and R¹¹ each being a hydrogen atom and m being from 1 to 4, is used as the pigment dispersant.

11. The process as claimed in at least one or more of claims 1 to 8, wherein at least one compound of the formula (I) in which
P has the meaning shown in claim 2,
X is a group of the formula (IIIf) 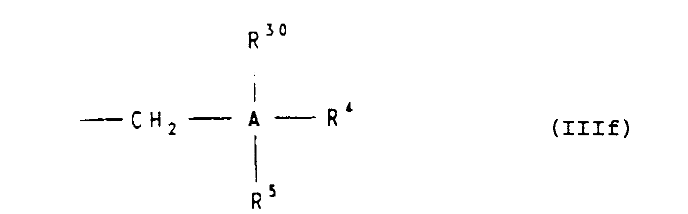 in which A is an imidazole, triazole or pyrazole radical and the heterocycle mentioned is attached to the methylene group via a carbon atom, R³⁰ and R⁴ are each a hydrogen atom, a methyl, ethyl or C₂H₄OH group or in which R³⁰ and R⁴ together form a phenyl radical,
R⁵ is a hydrogen atom, a C₁-C₄-alkyl, a C₁-C₃-hydroxyalkyl or a C₂-C₄-alkenyl group and m is from 1 to 4, is used as the pigment dispersant.

12. The process as claimed in at least one of claims 1 to 11, wherein a mixture of different pigment dispersants of the formula (I) is used.

13. The process as claimed in at least one of claims 1 to 12, wherein the pigment dispersants of the formula (I) are present in amounts of 0.1 to 25% by weight, preferably 1 to 15% by weight, in particular 3 to 10% by weight, relative to the copper phthalocyanine pigment used.

## Revendications

1. Procédé de préparation d'un pigment de phtalocyanine de cuivre de la phase α ou d'une préparation pigmentaire à base d'un pigment de phtalocyanine de cuivre de la phase α, caractérisé en ce que le pigment de phtalocyanine de cuivre est présent principalement dans la phase β,
a) d'abord par broyage humide dans un milieu aqueux, qui peut contenir de petites quantités, <5 % en poids, d'un solvant organique, dans un agitateur-broyeur à boulets, que l'on exploite avec une puissance volumique supérieure à 2,5 kW par litre d'espace de broyage et avec une vitesse périphérique de l'agitateur supérieure à 12 m/seconde, sous l'action des corps broyants avec un diamètre inférieur à 1 mm, ensuite on soumet
b) la composition de prépigment obtenue selon le point a)
b1) soit sous forme de la suspension de mouture ainsi obtenue ; ou
b2) après l'ajout d'un solvant organique à la suspension de mouture obtenue au point a), soit
b3) dans le cas d'un isolement intermédiaire du prépigment ou de la composition de prépigment, après une reprise préalable dans un solvant organique inerte,
à un traitement de finition à température élevée, et
c) en isolant ensuite le pigment ou la préparation pigmentaire résultante.

2. Procédé selon la revendication 1, caractérisé en ce que l'on ajoute avant, au cours ou après une ou plusieurs étapes partielles a), b) et c) en une seule fois ou à plusieurs reprises, au moins un dispersant de pigment de formule (I)
P - Xₘ (I)
dans laquelle P représente un reste m-valent à base de la formule (II) 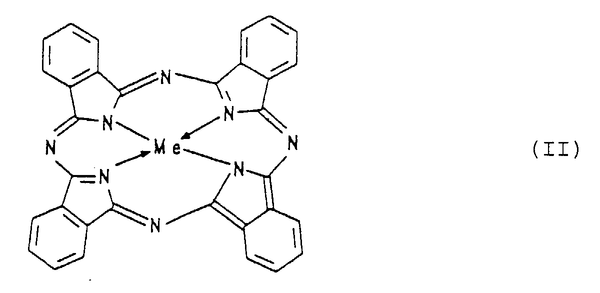 dans laquelle
m va de 1 à 6,
Me représente deux atomes d'hydrogène ou un atome de métal bivalent, de préférence un atome de cuivre, de fer, de zinc, de nickel, de cobalt ou d'étain, en particulier un atome de cuivre, et
X représente un groupe de formule (IIIa)
-COOM (IIIa)
ou un groupe de formule (IIIb)
-SO₃M (IIIb)
dans laquelle M représente un atome d'hydrogène ou un équivalent d'un ion de métal alcalin, alcalino-terreux ou d'ammonium, ou dans laquelle
X est un groupe de formule (IIIc) 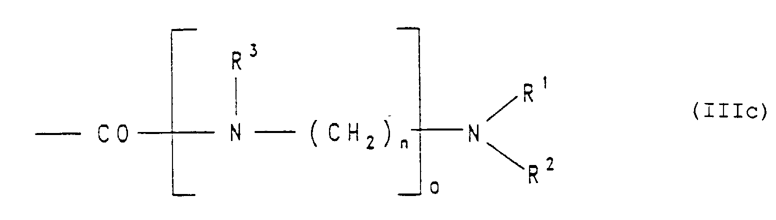 ou un groupe de formule (IIId) 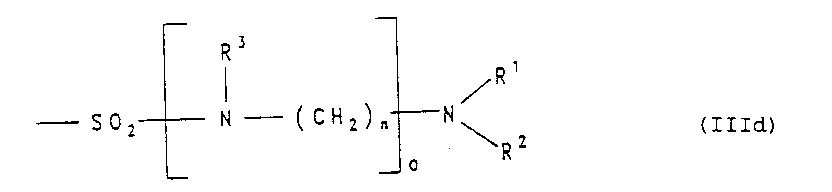 dans laquelle R¹ et R² sont identiques ou différents et représentent un atome d'hydrogène, un groupe alkyle en C₁-C₂₀, un groupe alcényle en C₂-C₂₀ ou un groupe cycloalkyle en C₅-C₇, de préférence un atome d'hydrogène, un groupe méthyle ou éthyle, ou dans laquelle R¹ et R², ensemble avec l'atome d'azote adjacent, représentent un système hétérocyclique aliphatique ou aromatique à 5 à 7 chaînons, avec à chaque fois 1 à 3 hétéroatomes identiques ou différents appartenant au cycle, de la famille des atomes d'azote, d'oxygène ou de soufre, de préférence imidazole, pipéridine, pipérazine, pyrrolidine, morpholine, imidazoline ou hexaméthylèneimine ;
R³ représente un atome d'hydrogène ou un groupe alkyle en C₁-C₄, de préférence un atome d'hydrogène ou un groupe méthyle,
n va de 1 à 6, de préférence vaut 2 ou 3,
o vaut de 0 ou 1, de préférence 1, et
m va 1 à 4, ou dans laquelle
X est un groupe aminométhylène de formule (IIIe) 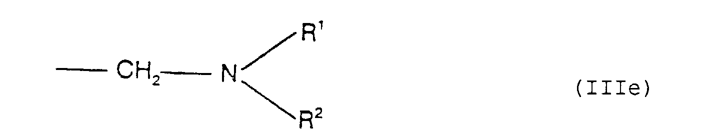 dans laquelle R¹ et R² ont la signification donnée ci-dessus et m va de 1 à 6, ou dans laquelle
X est un groupe de formule (IIIf) 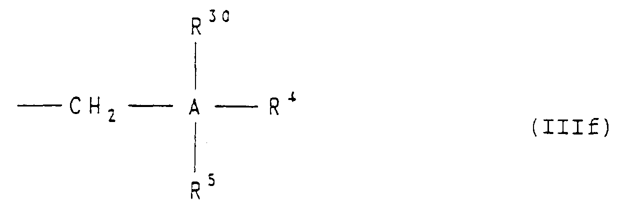 dans laquelle A représente un cycle aromatique à 5 ou 6 chaînons ou un hétérocycle aromatique condensé comportant 1 à 3 hétéroatomes identiques ou différents de la famille des atomes d'azote, d'oxygène et de soufre, de préférence imidazole, triazole ou pyrazole, et l'hétérocycle est relié au groupe méthylène par l'intermédiaire d'un atome de carbone,
R³⁰ et R⁴ représentent un atome d'hydrogène, un groupe alkyle en C₁-C₄, un groupe hydroxyalkyle en C₁-C₄ ou un groupe alcényle en C₂-C₄, de préférence un atome d'hydrogène, un groupe méthyle, éthyle ou C₂H₄OH, ou un groupe aryle, aryle représentant un phényle non substitué ou substitué par 1 à 4 restes pris dans le groupe comportant des groupes alkyle en C₁-C₆, halogèno, de préférence F, CI ou Br, alcoxy en C₁-C₆, cyano, CONH₂ et COOR¹², R¹² représentant un atome d'hydrogène ou un groupe alkyle en C₁-C₆,
R³⁰ et R⁴ ensemble pouvant former aussi un cycle aliphatique ou aromatique, de préférence un cycle phényle,
R⁵ représente un atome d'hydrogène, un groupe alkyle en C₁-C₄, un groupe hydroxyalkyle en C₁-C₃ ou un groupe alcényle en C₂-C₄, et
m va de 1 à 4, ou dans laquelle
X représente un groupe de formule (IIIg) 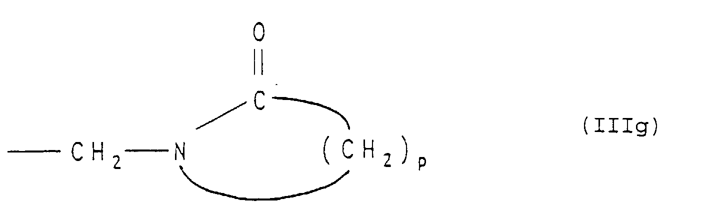 où
p va de 3 à 6, de préférence de 3 à 5, et m va de 1 à 4, ou dans laquelle,
X représente un groupe phtalimidométhylène de formule (IIIh) 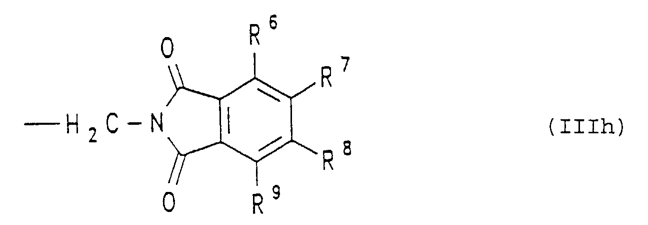 où R⁶, R⁸ et R⁹ sont identiques ou différents et représentent un atome d'hydrogène, de fluor, de chlore ou de brome, de préférence un atome d'hydrogène,
R⁷ représente un atome d'hydrogène, de fluor, de chlore ou de brome ou un groupe nitro, alkyle en C₁-C₆, alcoxy en C₁-C₆ ou benzoylamino, de préférence un atome d'hydrogène, et
m va de 1 à 4, ou dans laquelle
X est un groupe acide o-sulfobenzoimidométhylène de formule (IIIi) 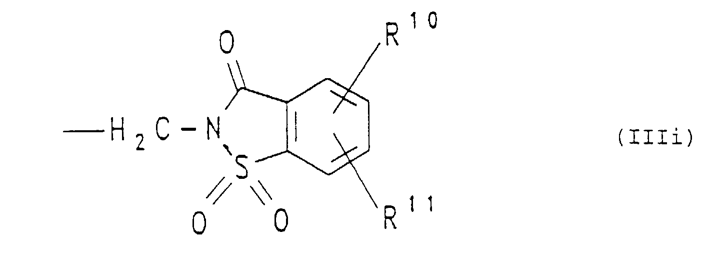
R¹⁰ et R¹¹ étant identiques ou différents et représentent un atome d'hydrogène, de chlore ou de brome ou un groupe alkyle en C₁-C₄, alcoxy en C₁-C₄ ou nitro, de préférence un atome d'hydrogène, et
m va de 1 à 4, ou dans laquelle
X est un groupe de formule (IIIk) 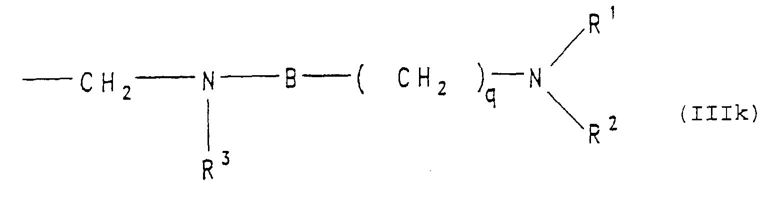 dans laquelle B est un groupe carbonyle ou sulfonyle, de préférence un groupe carbonyle, et R¹, R² et R³ ont la signification donnée ci-dessus,
q vaut 1 ou 2, de préférence 1, et
m va de 1 à 4,
ou on ajoute au moins un dispersant de pigment de formule (I) qui contient dans une molécule les différents restes X indiqués ci-dessus.

3. Procédé selon la revendication 1 ou 2, caractérisé en ce que l'on utilise des corps broyants d'un diamètre de 0,2 à 1,0 mm, de préférence de 0,3 à 0,5 mm.

4. Procédé selon au moins l'une des revendications 1 à 3, caractérisé en ce que dans l'agitateur-broyeur à boulets, le rapport de l'espace de broyage à la surface de l'espace de broyage est inférieur à 0,15:1 (dm³: dm²) .

5. Procédé selon au moins l'une des revendications 1 à 4, caractérisé en ce que la concentration en pigment dans la suspension de la mouture est de 40 % en poids au maximum, de préférence de 10 à 35 % en poids, plus particulièrement de 10 à 20 % en poids.

6. Procédé selon au moins l'une des revendications 1 à 5, caractérisé en ce que l'on met en oeuvre le broyage par voie humide dans un domaine du pH neutre ou alcalin.

7. Procédé selon au moins l'une des revendications 1 à 6, caractérisé en ce que l'on met en oeuvre le traitement de finition dans un mélange d'eau et d'un alcanol, de préférence d'un butanol.

8. Procédé selon au moins l'une des revendications 1 à 7, caractérisé en ce que l'on utilise des pigments bruts de phtalocyanine de cuivre hautement cristallins de la phase β, qui peuvent contenir encore de petites quantités de groupes acide carboxylique ou acide sulfonique.

9. Procédé selon au moins l'une des revendications 1 à 8, caractérisé en ce que l'on utilise comme dispersant de pigment au moins un composé de formule (I), dans laquelle P a la signification indiquée dans la revendication 2, X représente un groupe phtalimidométhylène de formule (IIIh) 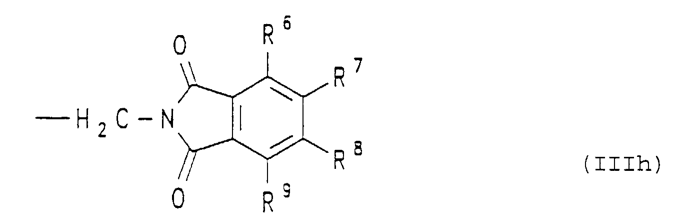 R⁶, R⁷, R⁸ et R⁹ chacun représente un atome d'hydrogène, et m va de 1 à 4.

10. Procédé selon au moins l'une des revendications 1 à 8, caractérisé en ce que l'on utilise en tant que dispersant de pigment au moins un composé de formule (I), dans laquelle
P a la signification indiquée dans la revendication 2,
X représente un groupe acide o-sulfobenzoimidométhylène de formule (IIIi) 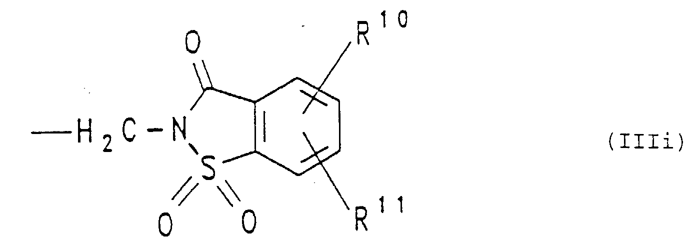
R¹⁰ et R¹¹ chacun représentant un atome d'hydrogène et m allant de 1 à 4.

11. Procédé selon au moins une ou plusieurs des revendications 1 à 8, caractérisé en ce que l'on utilise en tant que dispersant de pigment au moins un composé de formule (I), dans laquelle
P a la signification donnée dans la revendication 2,
X représente un groupe de formule (IIIf) 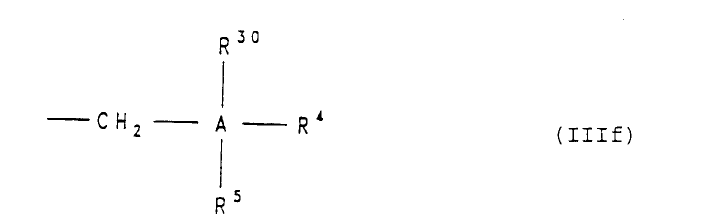 dans laquelle A représente un reste imidazole, triazole ou pyrazole et l'hétérocycle cité étant lié au groupe méthylène par l'intermédiaire d'un atome de carbone, R³⁰ et R⁴ étant un atome d'hydrogène, un groupe méthyle, éthyle, ou C₂H₄-OH, ou
R³⁰ et R⁴ forment ensemble un cycle phényle,
R⁵ représente un atome d'hydrogène, un groupe alkyle en C₁-C₄, un groupe hydroxyalkyle en C₁-C₃ ou un groupe alcényle en C₂-C₄ et m va de 1 à 4.

12. Procédé selon au moins l'une des revendications 1 à 11, caractérisé en ce que l'on utilise un mélange de différents dispersants de pigment de formule (I).

13. Procédé selon au moins l'une des revendications 1 à 12, caractérisé en ce que les dispersants de pigment de formule (I) sont présents dans une quantité de 0,1 à 25 % en poids, de préférence de 1 à 15 % en poids, plus particulièrement de 3 à 10 % en poids, par rapport au pigment de phtalocyanine de cuivre utilisé.
